(19) Europäisches Patentamt
European Patent Office
Office européen des brevets

(11) EP 4 759 843 A1

(12) **EUROPEAN PATENT APPLICATION**
published in accordance with Art. 153(4) EPC

(43) Date of publication:
**17.06.2026 Bulletin 2026/25**

(21) Application number: **24856778.6**

(22) Date of filing: **19.08.2024**

(51) International Patent Classification (IPC):
***C08F 220/58*** *(2006.01)* ***C08F 220/30*** *(2006.01)*
***H01M 50/417*** *(2021.01)* ***H01M 50/42*** *(2021.01)*
***H01M 50/446*** *(2021.01)* ***H01M 50/449*** *(2021.01)*
***H01M 50/431*** *(2021.01)* ***H01M 50/403*** *(2021.01)*
***H01M 10/052*** *(2010.01)*

(52) Cooperative Patent Classification (CPC):
**C08F 220/30; C08F 220/58; H01M 10/052; H01M 50/403; H01M 50/417; H01M 50/42; H01M 50/431; H01M 50/446; H01M 50/449;** Y02E 60/10

(86) International application number:
**PCT/KR2024/012288**

(87) International publication number:
**WO 2025/042167 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.08.2023 KR 20230108620**

(71) Applicant: **LG Chem, Ltd.**
**Seoul 07336 (KR)**

(72) Inventors:
- **PARK, Beom-Su**
  **Daejeon 34122 (KR)**
- **SHIN, Young-Jun**
  **Daejeon 34122 (KR)**
- **KIM, Hyun-Cheol**
  **Daejeon 34122 (KR)**
- **KIM, Jin-Woo**
  **Daejeon 34122 (KR)**
- **YANG, Hyung-Il**
  **Daejeon 34122 (KR)**

(74) Representative: **Hoffmann Eitle**
**Patent- und Rechtsanwälte PartmbB**
**Arabellastraße 30**
**81925 München (DE)**

(54) **PHOTOINITIATIED COPOLYMER RESIN, SEPARATOR CONTAINING CROSS-LINKED STRUCTURE FOR LITHIUM SECONDARY BATTERY, AND METHOD FOR MANUFACTURING SAME**

(57) The present disclosure relates to a photoinitiated copolymer resin having a novel structure capable of crosslinking an olefin polymer porous support by penetrating an olefin polymer under an aqueous dispersion medium condition, a crosslinked structure-containing separator for a lithium secondary battery comprising the photoinitiated copolymer resin, and a manufacturing method therefor.

EP 4 759 843 A1

## Description

### Technical Field

This application claims priority to Korean Patent Application No. 10-2023-0108620, filed on August 18, 2023. The present disclosure relates to a photoinitiated copolymer resin, a crosslinked structure-containing separator for a lithium secondary battery including the same, and a method for manufacturing the same.

[Background Art]

Recently, interest in energy storage technology is increasing. As its application fields expand to energy of mobile phones, camcorders, laptops, and even electric vehicles, there is a growing demand for high energy density of batteries used as power sources for these electronic devices. Lithium secondary batteries are batteries that can best meet these demands, and active research thereon is currently being conducted.

These lithium secondary batteries are composed of a positive electrode, a negative electrode, an electrolyte, and a separator, wherein the separator is required to have insulating properties to separate and electrically insulate the positive electrode and the negative electrode, as well as high ionic conductivity to increase lithium ion permeability based on high porosity.

As such separators, olefin polymer separators are widely used. However, in the case of ethylene polymer (PE)-based separators, which are representative olefin polymer separators, since the melting point (Tm) is low, when the temperature of the battery rises to or above the melting point of the ethylene polymer under a battery misuse environment, a melt-down phenomenon may occur, causing ignition and explosion. Furthermore, due to material properties and manufacturing process characteristics, the separator exhibits severe thermal shrinkage behavior under high-temperature conditions, etc., leading to safety issues such as internal short circuits.

Accordingly, various methods for improving the heat resistance of olefin polymer separators have been devised.

Korean Patent Laid-Open Publication No. 10-2006-0021221 proposes a separator in which a coating layer including ceramic particles as an inorganic filler and a binder polymer is formed on at least one surface of an olefin polymer separator. However, when the temperature of the battery rises to or above the melting point of the olefin polymer, there is a problem in that the melt-down phenomenon still occurs. In addition, there is a problem in that the coating layer is peeled off or the inorganic filler is detached from the coating layer due to the shrinkage of the olefin polymer, thereby deteriorating the heat resistance safety of the separator. Therefore, there is still a very high need for a separator capable of securing safety at high temperatures.

Alternatively, a method has been proposed to increase the safety of a separator by directly cross-linking an olefin polymer using a photoinitiator. However, since the existing photoinitiators are substances that dissolve well in organic solvents, they cannot secure sufficient solubility in aqueous solvents, and thus cannot be used in aqueous solvents that are advantageous in terms of cost and environmental friendliness.

Therefore, there is a need to develop a binder resin for a separator coating layer that can improve the heat resistance of the separator by preventing the detachment of binder particles and peeling of the coating layer when applied to the coating layer. In addition, there is an increasing need for a binder resin for a coating layer that is applicable to a composition for a coating layer using an aqueous solvent and is capable of crosslinking olefin polymers.

## Disclosure

### Technical Problem

Accordingly, an object of the present disclosure is to solve the above-described problems, and to provide a photoinitiated copolymer resin having a novel structure capable of preventing peeling of a separator coating layer and detachment of an inorganic filler, and a method for producing the same.

Another object of the present disclosure is to provide a crosslinked structure-containing separator for a lithium secondary battery including the photoinitiated copolymer resin having the novel structure, and a method for manufacturing the same.

### Technical Solution

A first aspect of the present disclosure relates to a photoinitiated copolymer resin including: as repeating units, a first unit to which a functional group derived from an aromatic carbonyl compound is bonded, and a second unit including a hydrophilic group including a nitrogen-containing ring and/or an amine group at the terminal.

According to a second aspect of the present disclosure, in the above-described aspect, the aromatic carbonyl

compound may include a benzophenone-based compound, a xanthone-based compound, a thioxanthone-based compound, or a combination of two or more thereof.

According to a third aspect of the present disclosure, in any one of the above-described aspects, the first unit may include a repeating unit represented by Chemical Formula 1a below, a repeating unit represented by Chemical Formula 1b below, or both:

[Chemical Formula 1a]

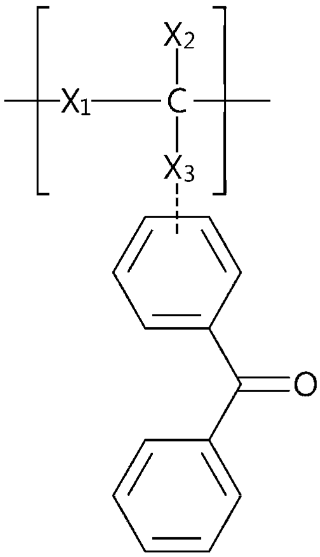

[Chemical Formula 1b]

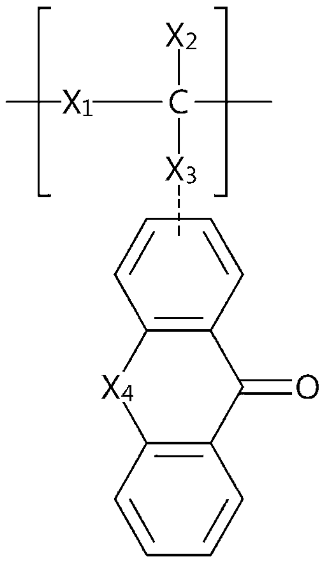

wherein $X_1$ is a single bond, or a linear or branched alkylene group ($-CH_2-$) having 1 to 5 carbon atoms, wherein at least one hydrogen of the alkylene group may be substituted with a linear or branched alkyl group having 1 to 3 carbon atoms,

$X_2$ is hydrogen, or a linear or branched alkyl group having 1 to 5 carbon atoms,

$X_3$ is $R_1$, $R_2$, or $R_1R_2$, wherein $R_1$ is an alkylene group having 1 to 10 carbon atoms, -O-, -C(=O)-, -C(=O)-O-, -O-C(=O)-O-, -O-C(=O)-, -NH-, an ester group, an amide group, an alkoxy group, or a carbonyl group, and $R_2$ is a divalent linking group including at least one selected from the group consisting of an ester group, an amide group, an alkoxy group, a carbonyl group, a carboxyl group, -O-, -C(=O)-, -C(=O)-O-, -O-C(=O)-O-, -O-C(=O)-, -S-, $-S(=O)_2-$, $-S(=O)_2-O-$, -NH-, $-NR_3$ (wherein $R_3$ is an alkyl group or an acyl group), -NH-C(=O)-, - C(=O)NH-, and =N-,

$X_4$ is oxygen or sulfur, and

the dashed line indicates a linkage of $X_3$ and is bonded to position 2, position 3, or position 4 of the aromatic ring.

According to a fourth aspect of the present disclosure, in any one of the above-described aspects, the first unit may include Chemical Formula 2a below, Chemical Formula 2b below, Chemical Formula 2c below, Chemical Formula 2d below, or a combination of two or more thereof:

[Chemical Formula 2a]

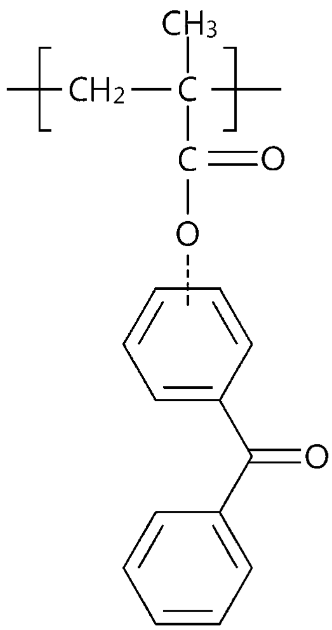

[Chemical Formula 2b]

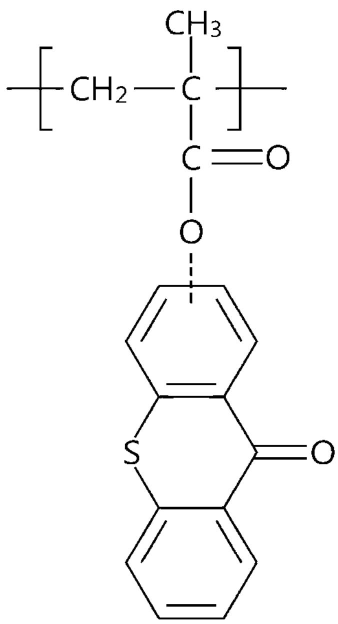

[Chemical Formula 2c]

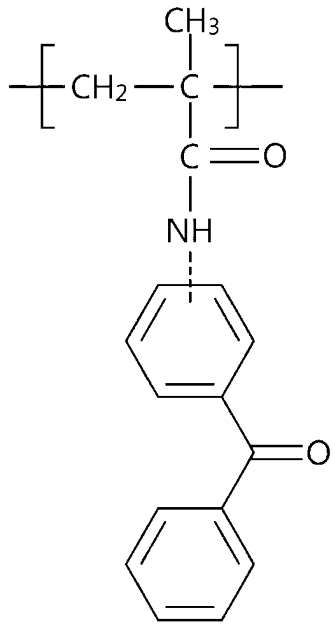

[Chemical Formula 2d]

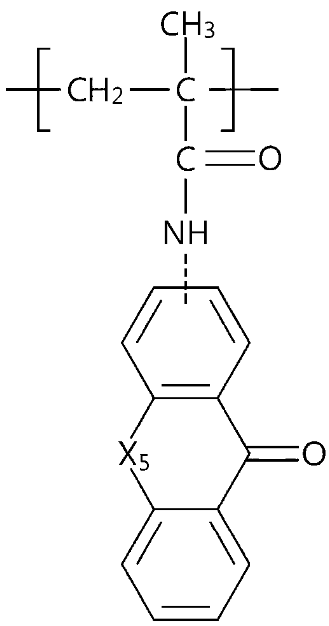

wherein $X_5$ in Chemical Formula 2d above is sulfur or oxygen.

According to a fifth aspect of the present disclosure, in any one of the above-described aspects, the hydrophilic group of the second unit may be linked to the main chain through an amide bond.

According to a sixth aspect of the present disclosure, in any one of the above-described aspects, the second unit may include a repeating unit represented by Chemical Formula 5 below:

[Chemical Formula 5]

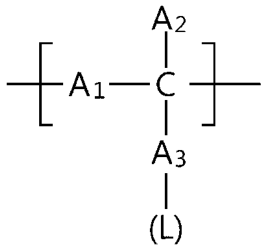

wherein $A_1$ is a single bond, or a linear or branched alkylene group ($-CH_2-$) having 1 to 5 carbon atoms, wherein at least one hydrogen of the alkylene group may be substituted with a linear or branched alkyl group having 1 to 3 carbon atoms,

$A_2$ is hydrogen, or a linear or branched alkyl group having 1 to 5 carbon atoms,

$A_3$ is null, or is $R_1$, $R_2$, or $R_1R_2$, wherein $R_1$ is an alkylene group having 1 to 10 carbon atoms, -O-, -C(=O)-, -C(=O)-O-, -O-C(=O)-O-, -O-C(=O)-, -NH-, an ester group, an amide group, an alkoxy group, or a carbonyl group, and $R_2$ is a divalent linking group including at least one selected from the group consisting of an ester group, an amide group, an alkoxy group, a carbonyl group, a carboxyl group, -O-, -C(=O)-, -C(=O)-O-, -O-C(=O)-O-, -O-C(=O)-, - S-, $-S(=O)_2-$, $-S(=O)_2-O-$, -NH-, $-NR_3$ (wherein $R_3$ is an alkyl group or an acyl group), -NH-C(=O)-, -C(=O)NH-, and =N-, wherein when $A_3$ is null, it means a single bond through which (L) is directly bonded to the carbon of the main chain, and the (L) has a hydrophilic group including a nitrogen-containing ring and/or an amine group at the terminal.

According to a seventh aspect of the present disclosure, in any one of the above-described aspects, the hydrophilic group may include a morpholine-derived group, a piperidine-derived group, an oxazolidine-derived group, a thiooxazolidine-derived group, an ethyleneimine-derived group, a pyrrole-derived group, an imidazole-derived group, a diazetidine-derived group, a dithiazine-derived group, an azocane-derived group, an azonane-derived group, $-NR_4R_5$, or two or more thereof, wherein $R_4$ and $R_5$ are each independently hydrogen or an alkyl group having 1 to 10 carbon atoms.

According to an eighth aspect of the present disclosure, in any one of the above-described aspects, the second unit may include at least one of a repeating unit represented by Chemical Formula 5a and a repeating unit represented by Chemical Formula 5b:

[Chemical Formula 5a]

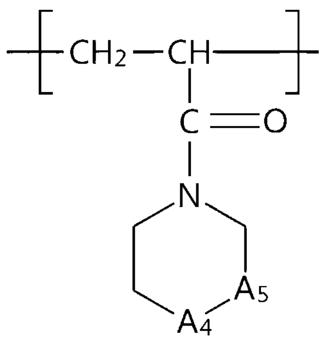

[Chemical Formula 5b]

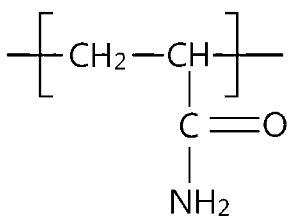

wherein $A_4$ in Chemical Formula 5a is oxygen (O), sulfur (S), or phosphorus (P), and $A_5$ is an alkenylene group ($-(CH_2)-$)

having 1 to 5 carbon atoms.

According to a ninth aspect of the present disclosure, in any one of the above-described aspects, the photoinitiated copolymer resin may include a repeating unit represented by Chemical Formula 7a below and/or a repeating unit represented by Chemical Formula 7b below, wherein the first unit is included in an amount of 10 wt% or less based on 100 wt% of the photoinitiated copolymer resin:

[Chemical Formula 7a]

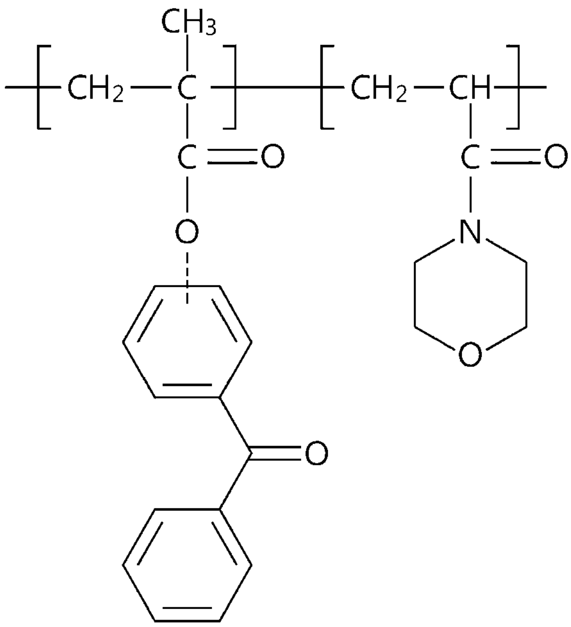

[Chemical Formula 7b]

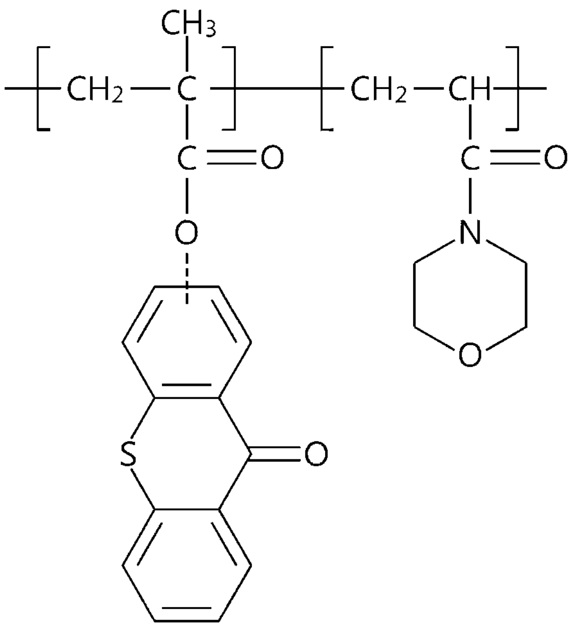

According to a tenth aspect of the present disclosure, in any one of the above-described aspects, the photoinitiated copolymer resin may include the first repeating unit in an amount of 10 wt% or less based on 100 wt% of the total photoinitiated copolymer resin.

According to an eleventh aspect of the present disclosure, in any one of the above-described aspects, the photoinitiated copolymer resin may have a glass transition temperature of 130°C to 220°C.

According to a twelfth aspect of the present disclosure, in any one of the above-described aspects, the photoinitiated copolymer resin may have a molecular weight of 5,000 to 100,000.

According to a thirteenth aspect of the present disclosure, in any one of the above-described aspects, the photoinitiated copolymer resin may have a PDI of 7 to 20.

According to a fourteenth aspect of the present disclosure, a separator includes: a crosslinked structure-containing olefin polymer porous support having a crosslinked structure in which polymer chains are directly linked to each other; a binder resin; and an inorganic filler,

wherein the binder resin includes the photoinitiated copolymer resin according to any one of the above-described aspects, and the photoinitiated copolymer resin is included in an amount of 50 wt% or more based on 100 wt% of the binder resin.

According to a fifteenth aspect of the present disclosure, in any one of the above-described aspects, the separator may include: the crosslinked structure-containing olefin polymer porous support; and an organic/inorganic composite porous coating layer positioned on at least one surface of the porous support,

wherein the photoinitiated copolymer resin is included in at least one of the crosslinked structure-containing olefin polymer porous support and the organic/inorganic composite porous coating layer, and

wherein the organic/inorganic composite porous coating layer includes a binder resin and an inorganic filler, wherein the inorganic filler is included in an amount of 70 wt% or more based on 100 wt% of the organic/inorganic composite porous coating layer.

According to a sixteenth aspect of the present disclosure, in at least one of the above-described aspects, the photoinitiated copolymer resin may be included in an amount of 0.1 to 5 parts by weight based on 100 parts by weight of the inorganic filler.

A seventeenth aspect of the present disclosure relates to a lithium secondary battery, the lithium secondary battery including a positive electrode, a negative electrode, and a separator interposed between the positive electrode and the negative electrode, wherein the separator is the crosslinked structure-containing separator for a lithium secondary battery according to any one of the above-described aspects.

An eighteenth aspect of the present disclosure relates to a method for manufacturing a crosslinked structure-containing separator for a lithium secondary battery, the method including: coating a composition including a photoinitiated copolymer resin, an inorganic filler, and an aqueous dispersion medium on an olefin polymer porous support by applying and drying the composition; and irradiating ultraviolet rays to the olefin polymer porous support coated with the composition, wherein the photoinitiated copolymer resin is the photoinitiated copolymer resin according to any one of the above-described aspects.

According to a nineteenth aspect of the present disclosure, in any one of the above-described aspects, in the irradiating of the ultraviolet rays, an ultraviolet irradiation dose is 10 $mJ/cm^2$ or more and 20,000 $mJ/cm^2$ or less.

According to a twentieth aspect of the present disclosure, in any one of the above-described aspects, the photoinitiated copolymer resin may include: as a first repeating unit, a repeating unit represented by Chemical Formula 2a below, a repeating unit represented by Chemical Formula 2b below, or both, and, as a second repeating unit, a repeating unit represented by Chemical Formula 5a below, wherein the first repeating unit is included in an amount of 10 wt% or less based on 100 wt% of the photoinitiated copolymer resin:

[Chemical Formula 2a]

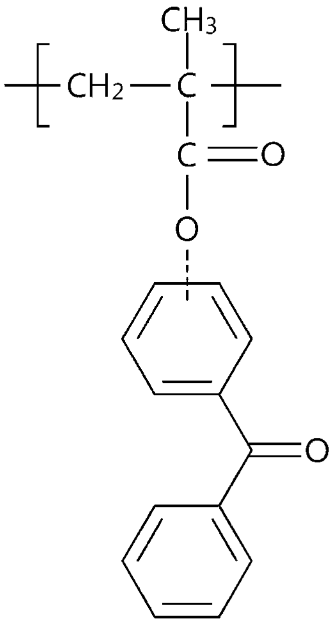

[Chemical Formula 2b]

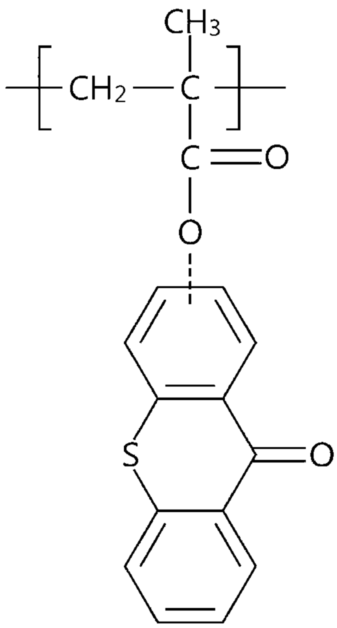

[Chemical Formula 5a]

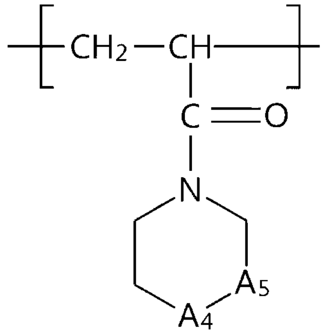

wherein $A_4$ in Chemical Formula 5a above is oxygen (O), sulfur (S), or phosphorus (P), and $A_5$ is an alkenylene group (-($CH_2$)-) having 1 to 5 carbon atoms.

Advantageous Effects

The photoinitiated copolymer resin according to the present disclosure can crosslink an olefin polymer porous support by penetrating the olefin polymer under aqueous dispersion medium conditions.

In addition, the crosslinked structure-containing separator for a lithium secondary battery including the photoinitiated copolymer resin according to the present disclosure includes a crosslinked structure-containing olefin polymer porous support having a crosslinked structure in which polymer chains are directly linked to each other, and can exhibit excellent heat resistance, thereby having a high melt-down temperature.

**Mode for Invention**

Hereinafter, the present disclosure will be described in detail. Prior to this, the terms or words used in the specification and claims of the present application should not be construed as being limited to their ordinary or dictionary meanings, but should be interpreted as meanings and concepts consistent with the technical spirit of the present disclosure, based on the principle that the inventor may adequately define the concepts of terms to best describe his/her disclosure. Therefore, it should be understood that the configurations described in the embodiments set forth in the specification are only one of the most preferred embodiments of the present disclosure and do not represent the entire technical concept of the present disclosure, and thus, various equivalents and modifications may be substituted for them at the time of filing this application.

Throughout the specification, when a part is described as "comprising" or "including" a certain component, it means that other components may be further comprised or included, rather than excluded, unless otherwise stated.

Throughout the specification, the phrase "A and/or B" means "A, B, or both A and B."

Throughout the specification, the terms "about" and "substantially" are used to mean a numerical value or a value close to that numerical value when manufacturing and material tolerances inherent to the stated value are presented, and are used to prevent unscrupulous infringers from unfairly exploiting the disclosure in which exact or absolute numerical values are mentioned to aid understanding of the present disclosure.

Throughout the specification, temperature refers to Celsius temperature, and the unit is °C, unless otherwise specified.

In the present disclosure, the term "alkylene group" refers to an alkyl group having two bonding positions, that is, a divalent group.

In the present disclosure, the term "alkenylene group" refers to an alkenyl group having two bonding positions, that is, a divalent group.

In the present disclosure, the term "cycloalkylene group" refers to a divalent alicyclic hydrocarbon group, which is derived from a monocyclic or polycyclic non-aromatic hydrocarbon.

In the present disclosure, the term "arylene group" refers to an aryl group having two bonding positions, that is, a divalent group.

An aqueous dispersion medium is advantageous in that it is environmentally friendly and does not require excessive heat for drying. Organic solvents widely used in the manufacture of separators have many environmental problems and thus require solvent recovery facilities or are subject to strict management and regulation. Accordingly, many attempts are being made to utilize such aqueous dispersion media as substitutes for organic solvents.

Meanwhile, in order to photocrosslink polymer chains within an olefin polymer porous support, a method has been proposed in which a photoinitiator is added to a composition for a coating layer, and the olefin polymer chains of the porous support are crosslinked during formation of the coating layer. To this end, the photoinitiator needs to be sufficiently dissolved in the solvent and introduced in a sufficient amount to crosslink the polymer chains on the surface of the olefin polymer porous support.

However, the photoinitiator commonly used to crosslink polymer chains within an olefin polymer porous support are readily soluble in organic solvents but exhibit very low solubility in aqueous dispersion media. As a result, when an aqueous dispersion medium is used, there is a problem in that not only cannot the photoinitiator be introduced in an amount sufficient to crosslink the polymer chains on the surface of the olefin polymer porous support, but also the photoinitiator is not uniformly applied on the surface of the olefin polymer porous support.

Accordingly, the present inventors have invented a novel photoinitiated copolymer resin that is sufficiently soluble even in an aqueous dispersion medium and is capable of directly crosslinking polymer chains within an olefin polymer porous support and/or a photoinitiated copolymer resin that is a heat-resistant resin, thereby completing the present disclosure.

**Photoinitiated Copolymer Resin**

The photoinitiated copolymer resin according to the present disclosure includes a first unit to which a functional group derived from an aromatic carbonyl compound is bonded. One or more of the first units may be included in the photoinitiated copolymer resin. In another embodiment of the present disclosure, the photoinitiated copolymer resin may further include a second unit to which a hydrophilic group is bonded. One or more of the second units may be included in the photoinitiated copolymer resin. The photoinitiated copolymer resin may be a block copolymer or a random copolymer including the first unit and the second unit, but the copolymerization form is not limited thereto. In the photoinitiated copolymer resin, the first unit and the second unit may have a molar ratio of 99.9:0.1 to 0.1:99.9. In a specific embodiment of the present disclosure, the photoinitiated copolymer resin may include the first unit in an amount of about 0.1 wt% to about 10 wt% based on a total weight of 100 wt%. Preferably, the first unit may be included in an amount of about 5 wt% or less, about 3 wt% or less, about 2.5 wt% or less, or about 2.0 wt% or less. In one embodiment of the present disclosure, the first unit may be included in an amount of about 0.1 wt% or more, about 0.5 wt% or more, about 0.7 wt% or more, or about 1.0 wt% or more. One or more of each of the first and second units may be independently included within a range that satisfies the aforementioned molar ratio and/or weight percentage. When the above content is less than 0.1 wt%, it is not desirable in that cross-linking by photoreaction is not sufficiently achieved. On the other hand, when the above content exceeds 10 wt% and is excessively high, it is not desirable in terms of solubility during preparation of a composition for forming a coating layer. Meanwhile, in one embodiment of the present disclosure, the second repeating unit may be included in an amount of 90 wt% to 99.1 wt% based on a total weight of 100 wt% of the photoinitiated copolymer resin.

The content of the repeating units can be confirmed by comparing the number of hydrogen peaks of the $CH_2$ groups in the polymer main chain with that of the aromatic groups in the polymer side chains through 1H-NMR. Meanwhile, in one embodiment, the 1H-NMR may be based on the chemical shift of tetramethylsilane (TMS) or the residual solvent peak.

In one embodiment of the present disclosure, the aromatic carbonyl compound may be at least one selected from the group consisting of benzophenone-based compounds, xanthone-based compounds, and thioxanthone-based compounds.

The benzophenone-based compound may be, for example, benzophenone, 4-phenylbenzophenone, 4-methoxybenzophenone, 4,4'-dimethoxybenzophenone, 4,4'-dimethylbenzophenone, 4,4'-dichlorobenzophenone, 4,4'-dimethylaminobenzophenone, 4,4'-diethylaminobenzophenone, 4-methylbenzophenone, 2,4,6-trimethylbenzophenone, 4-(4-methylthiophenyl)benzophenone, 3,3'-dimethyl-4-methoxybenzophenone, methyl-2-benzoylbenzoate, 4-(2-hydroxyethylthio)benzophenone, 4-(4-tolylthio)benzophenone, 4-benzoyl-N,N,N-trimethylbenzenemethanaminium chloride, 2-hydroxy-3-(4-benzoylphenoxy)-N,N,N-trimethyl-1-propanaminium chloride monohydrate, 4-(13-acryloyl-1,4,7,10,13-pentaoxatridecyl)benzophenone, or 4-benzoyl-N,N-dimethyl-N-[2-(1-oxo-2-propenyl)oxy]ethyl-benzenemethanaminium chloride, and may include one or more thereof.

Non-limiting examples of the xanthone-based compounds and thioxanthone-based compounds include thioxanthone, 2-isopropylthioxanthone, 2-chlorothioxanthone, 1-chloro-4-propoxythioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl)thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di-[2-(2-methoxyethoxy)ethoxycarbonyl]thioxanthone, 1,3-dimethyl-2-hydroxy-9H-thioxanthen-9-one 2-ethylhexyl ether, 1-ethoxycarbonyl-3-(1-methyl-1-morpholinoethyl)thioxanthone, 2-methyl-6-dimethoxymethylthioxanthone, 2-methyl-6-(1,1-dimethoxybenzyl)thioxanthone, 2-morpholinomethylthioxanthone, 2-methyl-6-morpholinomethylthioxanthone, N-allylthioxanthone-3,4-dicarboximide, N-octylthioxanthone-3,4-dicarboximide, N-(1,1,3,3-tetramethylbutyl)thioxanthone-3,4-dicarboximide, 1-phenoxythioxanthone, 6-ethoxycarbonyl-2-methoxythioxanthone, 6-ethoxycarbonyl-2-methylthioxanthone, thioxanthone-2-carboxylic acid polyethylene glycol ester, and 2-hydroxy-3-(3,4-dimethyl-9-oxo-9H-thioxanthone-2-yloxy)-N,N,N-trimethyl-1-propanaminium chloride. In a specific embodiment of the present disclosure, the aromatic carbonyl compound may include at least one selected from xanthone and thioxanthone.

In one embodiment of the present disclosure, the first unit includes a repeating unit that may be represented by Chemical Formula 1a, Chemical Formula 1b, or Chemical Formula 1c below. One or more of the first repeating units may be included in the photoinitiated copolymer resin.

[Chemical Formula 1a]

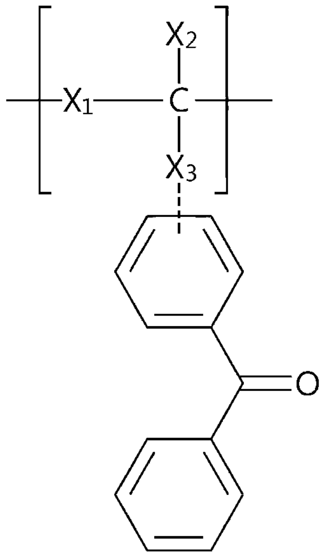

[Chemical Formula 1b]

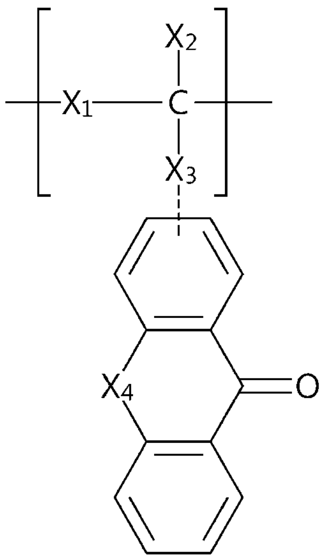

In Chemical Formulas 1a and 1b above, $X_1$ is a single bond, or a linear or branched alkylene group ($-CH_2-$) having 1 to 5 carbon atoms, wherein at least one hydrogen of the alkylene group may be substituted with a linear or branched alkyl group having 1 to 3 carbon atoms,

$X_2$ is hydrogen, or a linear or branched alkyl group having 1 to 5 carbon atoms,

$X_3$ is $R_1$, $R_2$, or $R_1R_2$, wherein $R_1$ is an alkylene group having 1 to 10 carbon atoms, -O-, -C(=O)-, -C(=O)-O-, -O-C(=O)-O-, -O-C(=O)-, -NH-, an ester group, an amide group, an alkoxy group, or a carbonyl group, and $R_2$ is a divalent

linking group including at least one selected from the group consisting of an ester group, an amide group, an alkoxy group, a carbonyl group, a carboxyl group, -O-, -C(=O)-, -C(=O)-O-, -O-C(=O)-O-, -O-C(=O)-, -S-, $-S(=O)_2-$, $-S(=O)_2-O-$, -NH-, $-NR_3$ (wherein $R_3$ is an alkyl group or an acyl group), -NH-C(=O)-, - C(=O)NH-, and =N-, the dashed line indicates a linkage of $X_3$ and may be bonded to position 2, position 3, position 4, or position 5 of the aromatic ring.

In one embodiment of the present disclosure, $X_3$ may be -C(=O)O- or $-C(=O)NR_4-$, wherein $R_4$ may be hydrogen or an alkyl group having 1 to 10 carbon atoms. Meanwhile, in Chemical Formula 1b, $X_4$ may be oxygen (O) or sulfur (S).

In a more specific embodiment of the present disclosure, the first unit may include a repeating unit represented by Chemical Formula 2a, Chemical Formula 2b, Chemical Formula 2c, or Chemical Formula 2d below:

[Chemical Formula 2a]

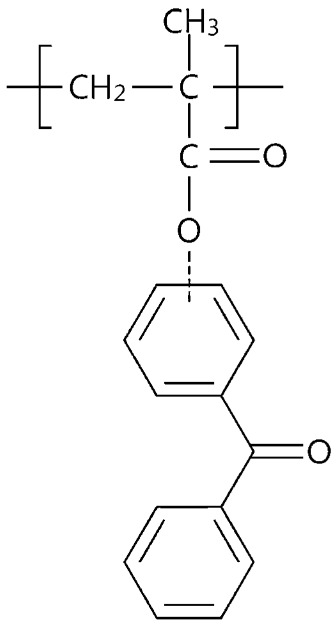

[Chemical Formula 2b]

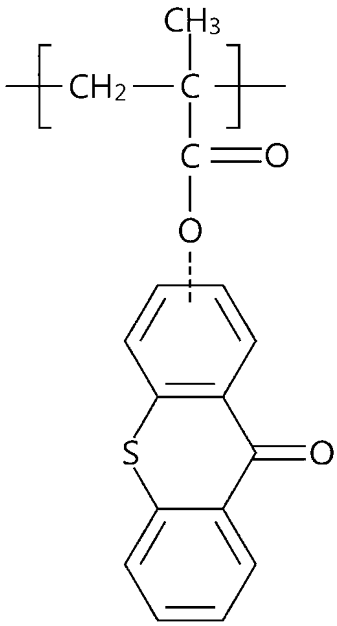

[Chemical Formula 2c]

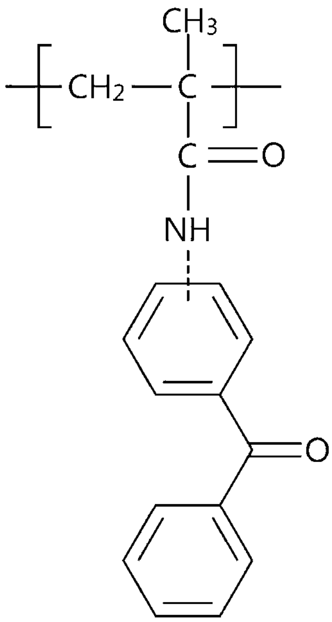

[Chemical Formula 2d]

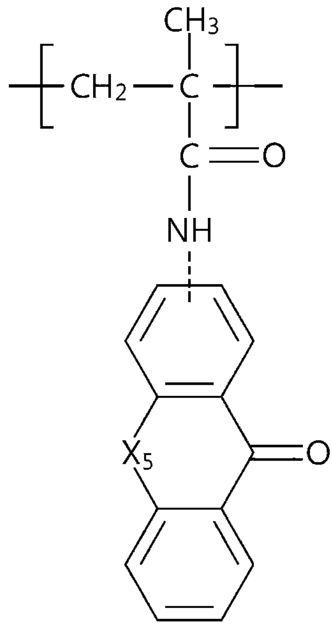

wherein $X_3$ in Chemical Formula 2d may be oxygen (O) or sulfur (S).

In a specific embodiment of the present disclosure, the first unit may be derived from a first monomer which is an acrylic compound having an aromatic carbonyl compound-derived functional group.

In a specific embodiment of the present disclosure, the first monomer may be 4-benzoylphenyl methacrylate, and may be represented as shown in Chemical Formula 3a below. Meanwhile, another specific example of the acrylic compound having an aromatic carbonyl compound-derived functional group may be represented as shown in Chemical Formula 3b or Chemical Formula 3c below.

[Chemical Formula 3a]

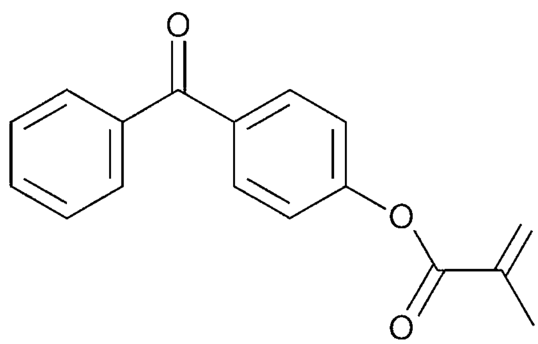

[Chemical Formula 3b]

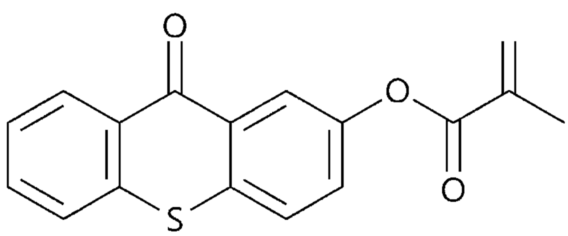

[Chemical Formula 3c]

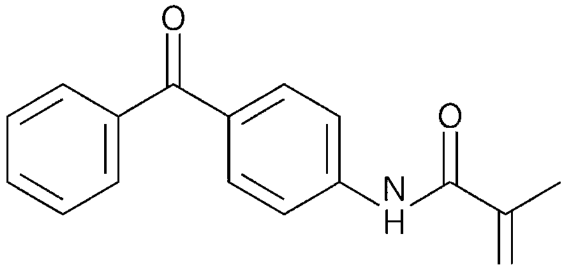

In one embodiment of the present disclosure, the first monomer may be commercially available, or may be obtained by a nucleophilic acyl substitution reaction of a benzophenone including a hydroxy group and (meth)acrylic anhydride. Alternatively, it may be obtained by a nucleophilic acyl substitution reaction of a hydroxy thioxanthone containing a hydroxy group with (meth)acrylic anhydride. Alternatively, it may be obtained by reacting aminobenzophenone and methacryloyl chloride in the presence of an inorganic acid catalyst. In order to promote the reaction, an acid catalyst may be added, and the reaction may proceed during heating. In the nucleophilic acyl substitution reaction, it is appropriate to add an inorganic acid so that an anion formed after ionization does not affect the reaction, and examples of the inorganic acid include sulfuric acid, nitric acid, and phosphoric acid. The inorganic acid may include one or more selected from sulfuric acid, nitric acid, and phosphoric acid.

Meanwhile, the benzophenone, thioxanthone, or xanthone including a hydroxy group may each have a hydroxy group or an amine group directly linked to any one ring. Chemical Formula 4a below illustrates the structure of hydroxy benzophenone. Chemical Formula 4b below illustrates the structure of hydroxy thioxanthone. In Chemical Formula 4c below, the hydroxy group or amine group may be positioned without limitation at any position where a hydrogen atom in each linked ring is substituted. For example, the hydroxy group may be positioned at one or more of positions 1 to 8 of the benzophenone, xanthone, or thioxanthone. For example, the thioxanthone including a hydroxy group may be 2-hydroxy-9H-thioxanthen-9-one.

[Chemical Formula 4a]

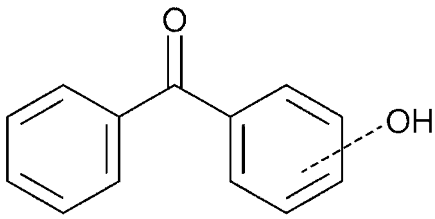

[Chemical Formula 4b]

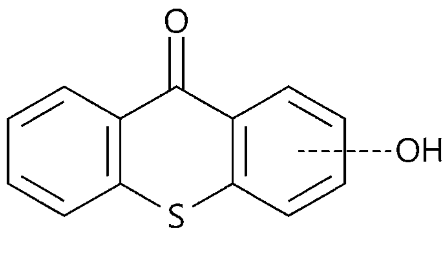

[Chemical Formula 4c]

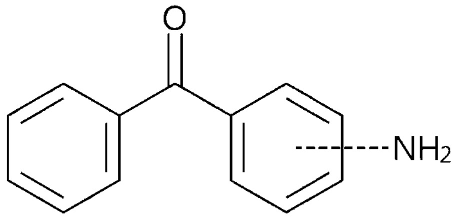

Meanwhile, in one embodiment of the present disclosure, the second unit has a hydrophilic group bonded to the terminal. For example, the second unit may include one or more of those represented by Chemical Formula 5 below. One or more of the second units may be included in the photoinitiated copolymer resin according to the present disclosure.

[Chemical Formula 5]

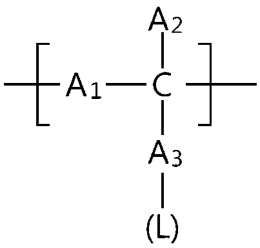

wherein $A_1$ is a single bond, or a linear or branched alkylene group ($-CH_2-$) having 1 to 5 carbon atoms, wherein at least one hydrogen of the alkylene group may be substituted with a linear or branched alkyl group having 1 to 3 carbon atoms,

$A_2$ is hydrogen, or a linear or branched alkyl group having 1 to 5 carbon atoms,

$A_3$ is null, or is $R_1$, $R_2$, or $R_1R_2$, wherein $R_1$ is an alkylene group having 1 to 10 carbon atoms, -O-, -C(=O)-, -C(=O)-O-, -O-C(=O)-O-, -O-C(=O)-, -NH-, an ester group, an amide group, an alkoxy group, or a carbonyl group, and $R_2$ is a divalent linking group including at least one selected from the group consisting of an ester group, an amide group, an alkoxy group, a carbonyl group, a carboxyl group, -O-, -C(=O)-, -C(=O)-O-, -O-C(=O)-O-, -O-C(=O)-, - S-, $-S(=O)_2-$, $-S(=O)_2-O-$, -NH-, $-NR_3$ (wherein $R_3$ is an alkyl group or an acyl group), -NH-C(=O)-, -C(=O)NH-, and =N-, wherein when $A_3$ is null, it means a single bond through which (L) is directly bonded to the carbon of the main chain.

The (L) is a terminal group containing a hydrophilic group at the terminal, and it is preferable that it has the effect of improving the hydrophilicity of the photoinitiated copolymer resin or increasing the glass transition temperature, or has both of these effects.

For example, the hydrophilic group may include -OH, -C(=O)OH, a nitrogen-containing ring, an amine group, or one or more thereof. In a preferred embodiment of the present disclosure, the hydrophilic group may include a nitrogen-containing ring and/or an amine group, and more preferably, the hydrophilic group may be linked to a main chain through an amide bond.

In a specific embodiment, the hydrophilic group may be a morpholine-derived group, a piperidine-derived group, an oxazolidine-derived group, a thiooxazolidine-derived group, an ethyleneimine-derived group, a pyrrole-derived group, an imidazole-derived group, a diazetidine-derived group, a dithiazine-derived group, an azocane-derived group, an azonane-derived group, $-NR_4R_5$, or a combination of two or more thereof, wherein $R_4$ and $R_5$ may each independently be hydrogen or an alkyl group having 1 to 10 carbon atoms.

In a specific embodiment of the present disclosure, the second unit may be more specifically represented as Chemical Formula 5a and Chemical Formula 5b below:

[Chemical Formula 5a]

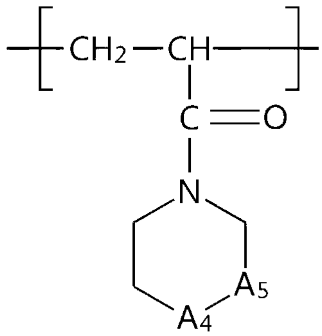

wherein $A_4$ in Chemical Formula 5a above may be oxygen (O), sulfur (S), or phosphorus (P), and $A_5$ may be an alkenylene group ($-(CH_2)-$) having 1 to 5 carbon atoms.

[Chemical Formula 5b]

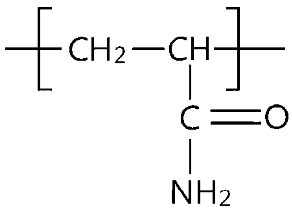

Meanwhile, in another embodiment, the second unit may further include a second unit in which the hydrophilic group is -OH or -C(=O)OH, in addition to the nitrogen-containing ring and/or amine group described above as the hydrophilic group. For example, the second unit may further include a repeating unit represented by Chemical Formula 5c below:

[Chemical Formula 5c]

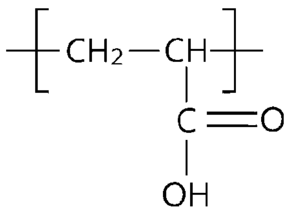

In a specific embodiment of the present disclosure, the second unit may be derived from a second monomer that is a vinyl-based compound containing a morpholine group. In a specific embodiment, non-limiting examples of the second monomer may include acryloyl morpholine, and may be represented as shown in Chemical Formula 6 below:

[Chemical Formula 6]

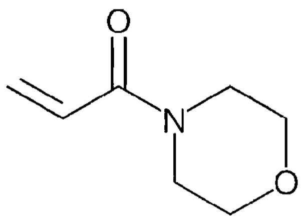

In a specific embodiment of the present disclosure, the first unit may be derived from an acrylic monomer (first monomer) to which a functional group derived from a benzophenone-based compound is bonded, and the second unit may be derived from an acrylic monomer (second monomer) to which a morpholine group is bonded.

In one embodiment of the present disclosure, the copolymer resin including the first unit and the second unit may be represented, for example, as Chemical Formula 7a or Chemical Formula 7b below:

[Chemical Formula 7a]

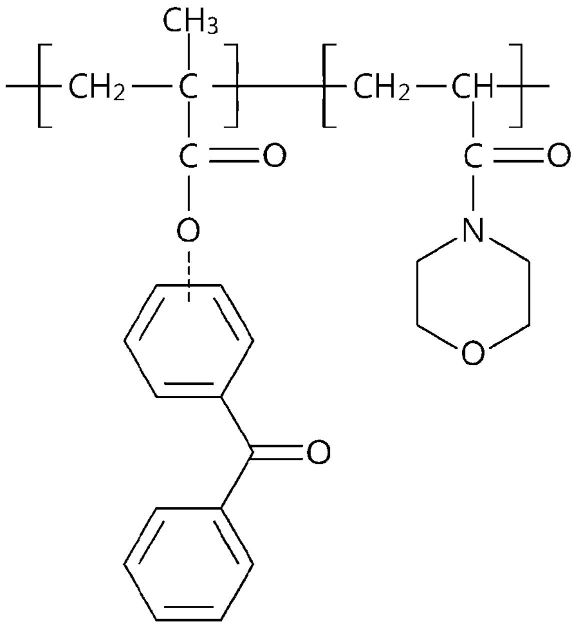

[Chemical Formula 7b]

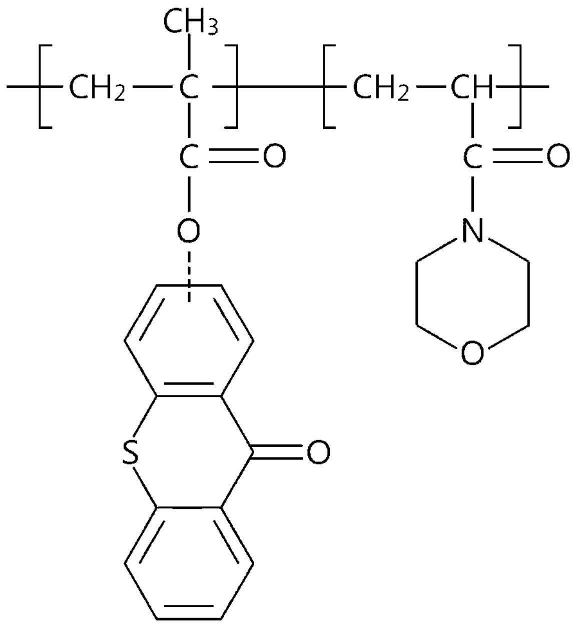

In Chemical Formula 7a and/or Chemical Formula 7b above, one or more of each of the first and second units may be independently included. The order of the first repeat unit and the second repeat unit in Chemical Formula 7a and Chemical Formula 7b above is exemplary and is not particularly limited thereto. In addition, in Chemical Formula 7a and/or Chemical Formula 7b above, the first unit and the second unit may have a ratio (molar ratio) of 99.9:0.1 to 0.1:99.9. In another embodiment of the present disclosure, at least one of the hydrogens bonded to the carbons of the main chain of the copolymer resin in Chemical Formula 7a and/or Chemical Formula 7b above may be substituted with a linear or branched

alkyl group having 1 to 5 carbon atoms.

Meanwhile, in a specific embodiment of the present disclosure, the photoinitiated copolymer resin may have a molecular weight (weight average molecular weight, Mw) in a range of 5,000 to 100,000, or 10,000 to 100,000. Within the above ranges, the molecular weight may be 70,000 or less, 50,000 or less, or 30,000 or less. Within the above ranges, the molecular weight may be 5,000 or more, 7,000 or more, or 10,000 or more. In one embodiment of the present disclosure, the unit of the molecular weight may be g/mol.

Together with or independently of the above, the photoinitiated copolymer resin may have a polydispersity index (PDI) in a range of 7 to 20. Within the above range, the polydispersity index may be 17 or less, or 15 or less. Within the above range, the polydispersity index may be 10 or more, or 11 or more, or 12 or more.

The photoinitiated copolymer resin according to the present disclosure may exhibit a glass transition temperature (Tg) in a range of 130°C to 220°C. Preferably, the glass transition temperature may be 150°C or more, or 170°C or more. In one embodiment of the present disclosure, the glass transition temperature may be 200°C or less, or 180°C or less.

When the molecular weight of the photoinitiated copolymer resin is excessively high, the water solubility may be reduced, and when the molecular weight fails to reach the above range and is excessively low, the thermal shrinkage rate may increase, thereby reducing heat resistance. Meanwhile, when the PDI fails to reach the above range, the thermal shrinkage rate may increase, thereby reducing heat resistance. The photoinitiated copolymer resin of the present disclosure exhibits a high glass transition temperature, and thus, when applied to a separator, it has the effect of minimizing flowability even at high temperatures, thereby preventing shrinkage of the separator.

In one embodiment of the present disclosure, the molecular weight of the photoinitiated copolymer resin may be measured through gel permeation chromatography (GPC). The analytical device is not particularly limited, and for example, PL GPC220 from Agilent Technologies or GPC-900 from Japan Spectroscopic Corporation may be used. The measurement conditions may be set, for example, as follows:

Column (maker, model no.): 2 x TSKgel SupermultiporeHZ-M + TSKgel SuperHZ-2500
Eleunt : THF
Temperature : 40°C
Flow rate : 1.0 mL/min
Injection volume, sample concentration : 30 μL, 1~10 mg/mL
Standard : Polystyrene
Detector: RI

Meanwhile, the PDI may be determined based on Equation 1 below. In Equation 1 below, the weight average molecular weight and the number average molecular weight may each be confirmed through the molecular weight measurement method described above.

PDI = weight average molecular weight (Mw)/number average molecular weight (Mn) (Equation 1) Polydispersity Index (PDI)

Meanwhile, the glass transition temperature (Tg) may be measured using DSC (TA Instrument) equipment.

**Method for Producing Photoinitiated Copolymer Resin**

The photoinitiated copolymer resin of Chemical Formula 1 described above may be produced by polymerization of a first monomer and a second monomer. The polymerization may be carried out by one or more of bulk polymerization, solution polymerization, suspension polymerization, and emulsion polymerization methods, and is not particularly limited thereto.

For example, the polymerization may be performed by a solution polymerization method.

In a specific embodiment, first, the first monomer and the second monomer are mixed in a polymerization solvent so that the first monomer is included in an amount of about 0.1 to 5 wt% in the polymer resin. Thereafter, the mixture is substituted with $N_2$, heated to an initiation temperature, and an initiator is added thereto. Thereafter, the precipitated solid is washed with a solvent such as ethyl acetate and dried to obtain a polymer. If necessary, the dried sample may be diluted with a distilled water to a concentration of about 10 wt%.

The initiator is not limited, and examples thereof may include oxygen; dialkyl peroxides and derivatives thereof such as di-t-butyl peroxide, t-butyl cumyl peroxide, and dicumyl peroxide; diacyl peroxides such as diacetyl peroxide and dioctanoyl peroxide; peroxydicarbonates such as di-isopropyl peroxydicarbonate and di-2-ethylhexyl peroxydicarbonate; peroxy esters such as t-butyl peroxyisobutyrate, t-butyl peroxypivalate, and t-butyl peroxylaurate; ketone peroxides such as methyl ethyl ketone peroxide and cyclohexanone peroxide; hydroperoxides such as 2,2-bis(t-butylperoxy)octane and

1,1-bis(t-butylperoxy)cyclohexane; sulfur oxides such as potassium persulfate, ammonium persulfate, sodium hydro sulfite, sodium persulfate, and sodium bisulfate; and azo compounds such as $\alpha,\alpha'$-azoisobutyronitrile. In a specific embodiment, the initiator may be AIBN (azobisisobutyronitrile).

Meanwhile, in one embodiment of the present disclosure, a molecular weight regulator may be added in an amount of about 5,000 ppm relative to the monomers added during the reaction. The molecular weight regulator may include, for example, mercaptopropionic acid.

As the polymerization solvent, water, aliphatic alcohols, and aliphatic esters may be used. Specific examples may include aliphatic alcohols such as methanol, ethanol, and propanol, and methyl, ethyl, propyl, and butyl esters of formic acid, acetic acid, and propionic acid, as well as mixtures thereof. In particular, methanol and ethyl acetate are preferred because they exhibit a small chain transfer effect and excellent solubility with vinyl compounds. Accordingly, a polymer having a relatively high vinyl monomer content and a high molecular weight can be easily and desirably obtained.

**Crosslinked Structure-Containing Separator for Lithium Secondary Battery**

The present disclosure may provide a crosslinked structure-containing separator for a lithium secondary battery, the separator including: a crosslinked structure-containing olefin polymer porous support having a crosslinked structure in which polymer chains are directly linked to each other; an inorganic filler; and a binder resin, wherein the binder resin includes the above-described photoinitiated copolymer resin.

In one embodiment of the present disclosure, the separator may include the crosslinked structure-containing olefin polymer porous support, and an organic/inorganic composite porous coating layer positioned on at least one surface of the porous support.

Here, the photoinitiated copolymer resin may be included in at least one of the crosslinked structure-containing olefin polymer porous support and the organic/inorganic composite porous coating layer. Meanwhile, components such as the inorganic filler, the binder resins other than the photoinitiated copolymer resin, and surfactants may be positioned in the organic/inorganic composite porous coating layer.

**Photoinitiated Copolymer Resin**

In one embodiment of the present disclosure, the photoinitiated copolymer resin included in the crosslinked structure-containing separator for a lithium secondary battery includes all of the contents described above with respect to the photoinitiated copolymer resin.

The photoinitiated copolymer resin directly photocrosslinks polymer chains within the olefin polymer porous support. Specifically, the photoinitiated copolymer resin can act like a photoinitiator to generate radicals in the polymer chains within the olefin polymer porous support, and form a crosslinked structure in which the polymer chains are directly linked to each other. In addition, the photoinitiated copolymer resin can be sufficiently dissolved in an aqueous dispersion medium due to the effect of the second monomer having a hydrophilic group. In one embodiment of the present disclosure, the photoinitiated copolymer resin may have a solubility of 0.01 g or more per 100 g of the aqueous dispersion medium. Accordingly, the photoinitiated copolymer resin can be sufficiently dissolved in the aqueous dispersion medium to an extent capable of crosslinking the polymer chains within the olefin polymer porous support.

The solubility may be measured using a UV-visible spectrophotometer. Specifically, the photoinitiated copolymer resin is dissolved in a solvent to prepare solutions having various concentrations for which the mass concentrations are known in advance. After allowing the solutions to stand for 1 hour so that any undissolved photoinitiated copolymer resin is precipitated or floated on the solvent, the absorbance of the solution is measured at a specific wavelength (for example, 550 nm). In a graph in which the x-axis represents concentration and the y-axis represents absorbance, the starting point at which the absorbance becomes constant and saturated may be defined as the solubility of the photoinitiated copolymer resin.

The photoinitiated copolymer resin may be included in an amount of 0.1 to 5 parts by weight, or 0.3 to 3 parts by weight, or 0.5 to 1.5 parts by weight, based on 100 parts by weight of the inorganic filler to be described below. When the content of the photoinitiated copolymer resin satisfies the above-described range, it is possible to increase the meltdown temperature of the porous support itself by crosslinking the olefin polymer through the generation of appropriate radicals.

**Olefin Polymer Porous Support**

The olefin polymer porous support includes a "crosslinked structure in which polymer chains are directly linked to each other."

As used herein, the expression "crosslinked structure in which polymer chains are directly linked to each other" refers to a state in which polymer chains substantially composed of an olefin polymer, more preferably polymer chains composed solely of an olefin polymer, become reactive by the addition of the photoinitiated copolymer resin, so that the

polymer chains are directly crosslinked to each other. Therefore, a crosslinking reaction occurring between crosslinking agents when an additional crosslinking agent is added in addition to the above photoinitiated copolymer resin does not correspond to the "crosslinked structure in which polymer chains are directly linked to each other" as referred to in the present disclosure. Furthermore, a crosslinking reaction occurring between an additional crosslinking agent and the polymer chain does not correspond to the "crosslinked structure in which polymer chains are directly linked to each other" as referred to in the present disclosure, even if the polymer chain is substantially composed of an olefin polymer or is composed solely of an olefin polymer.

In addition, during a process in which polyolefin polymer chains are crosslinked with each other, crosslinking between photoinitiated copolymer resins may occur, or crosslinking between the photoinitiated copolymer resin and the polyolefin polymer chains may occur.

The crosslinked structure-containing separator for a lithium secondary battery according to one embodiment of the present disclosure can exhibit improved heat resistance by including the crosslinked structure-containing olefin polymer porous support having a crosslinked structure in which polymer chains are directly linked to each other.

In one embodiment of the present disclosure, the degree of crosslinking of the crosslinked structure-containing olefin polymer porous support may be 10% to 80%, or 30% to 55%, or 10% to 45%, or 15% to 40%, or 20% to 35%. When the crosslinked structure-containing olefin polymer porous support has a degree of crosslinking within the above-described range, it is possible to achieve a desired level of heat resistance, while also making it easier to increase the modulus.

In this case, the crosslinked structure-containing olefin polymer porous support is physically confined in a metal mesh, immersed in trichlorobenzene at 135°C, stirred for 20 hours, then taken out and completely dried. Then, the completely dried weight is measured, and the degree of crosslinking is calculated as a percentage of the weight of the remaining olefin polymer porous support relative to the initial weight.

**In** one embodiment of the present disclosure, the olefin polymer porous support may be a porous film.

The olefin polymer may include an ethylene polymer; a propylene polymer; a butylene polymer; a pentene polymer; a hexene polymer; an octene polymer; a copolymer of two or more of ethylene, propylene, butene, pentene, 4-methylpentene, hexene, and octene; or a mixture thereof.

Non-limiting examples of the ethylene polymer include low-density polyethylene (LDPE), linear low-density polyethylene (LLDPE), and high-density polyethylene (HDPE). When the ethylene polymer is a high-density polyethylene having a high crystallinity and a high melting point of the resin, it is possible to achieve a desired level of heat resistance, while also making it easier to increase the modulus.

The crosslinked structure-containing separator for a lithium secondary battery according to one embodiment of the present disclosure can exhibit excellent heat resistance without sacrificing other properties of the olefin polymer porous support by including the crosslinked structure-containing olefin polymer porous support.

## Organic/Inorganic Composite Porous Coating Layer

The separator according to the present disclosure may include an organic/inorganic composite porous coating layer including inorganic particles and a binder resin on at least one surface of the olefin polymer porous support. The binder resin includes the photoinitiated copolymer resin according to the present disclosure, and the photoinitiated copolymer resin may be included in an amount of 30 wt% or more, 50 wt% or more, or 70 wt% or more, based on 100 wt% of the binder resin. Meanwhile, the binder resin may be included in the organic/inorganic composite porous coating layer in an amount of 30 wt% or less, 20 wt% or less, 10 wt% or less, 5 wt% or less, 3 wt% or less, or 1 wt% or less. In addition, the organic/inorganic composite porous coating layer may include an organic filler and/or an inorganic filler. The filler may be, for example, an inorganic filler, and the inorganic filler may be included in an amount of 70 wt% or more, 80 wt% or more, 90 wt% or more, 95 wt% or more, or 97 wt% or more, based on 100 wt% of the coating layer. In addition, additives such as surfactants or dispersants included during the manufacture of the separator may be included, and such additives may be included in an amount of 10 wt% or less, 5 wt% or less, or 3 wt% or less, based on 100 wt% of the organic/inorganic composite porous coating layer.

In addition, the inorganic filler may be in the form of particles having a predetermined particle diameter. In this case, interstitial volumes exist between the particles to form micropores. That is, the binder resin attaches the inorganic filler particles to each other so that they can remain bound to each other, and the porous support and the coating layer can also remain bound to each other by the binder resin. In addition, as described above, during a process in which polyolefin polymer chains are crosslinked with each other, crosslinking between photoinitiated copolymer resins may occur, or crosslinking between the photoinitiated copolymer resin and the polyolefin polymer chains may occur. The formation of crosslinks in the copolymer resin as described above prevents the detachment of the inorganic filler and improves the peel strength of the coating layer and the porous support.

## Inorganic Filler

In one embodiment of the present disclosure, the separator includes an organic/inorganic composite porous coating layer, wherein the organic/inorganic composite porous coating layer may have a structure in which the inorganic fillers are filled and in contact with each other and are bound to each other by the binder resin, thereby forming interstitial volumes between the inorganic fillers, wherein the interstitial volumes between the inorganic fillers become void spaces to form pores.

The inorganic filler is not particularly limited as long as it is electrochemically stable. That is, the inorganic filler that may be used in the present disclosure is not particularly limited as long as it does not undergo oxidation and/or reduction reactions within the operating voltage range of the applied electrochemical device (for example, 0 to 5 V based on $Li/Li^+$). In particular, when an inorganic filler having a high dielectric constant is used as the inorganic filler, it can contribute to an increase in the degree of dissociation of an electrolyte salt in a liquid electrolyte, for example, a lithium salt, thereby improving the ionic conductivity of the electrolyte solution.

For the reasons described above, in one embodiment of the present disclosure, the inorganic filler may include a highly dielectric inorganic filler having a dielectric constant of 5 or more, preferably 10 or more. Non-limiting examples of inorganic fillers having a dielectric constant of 5 or more include $BaTiO_3$, $Pb(Zr,Ti)O_3$ (PZT), $Pb_{1-x}La_xZr_{1-y}Ti_yO_3$(PLZT, $0<x<1$, $0<y<1$), $Pb(Mg_{1/3}Nb_{2/3})O_3$-$PbTiO_3$(PMN-PT), hafnia ($HfO_2$), $SrTiO_3$, $SnO_2$, $CeO_2$, MgO, $Mg(OH)_2$, NiO, CaO, ZnO, $ZrO_2$, $SiO_2$, $Y_2O_3$, $Al_2O_3$, AlOOH, $Al(OH)_3$, SiC, $TiO_2$, or mixtures thereof.

In addition, the inorganic filler may be an inorganic filler having lithium ion transfer capability, i.e., an inorganic filler containing lithium elements but having a function of transporting lithium ions without storing lithium. Non-limiting examples of inorganic fillers having lithium ion transfer capability include lithium phosphate ($Li_3PO_4$), lithium titanium phosphate ($Li_xTi_y(PO_4)_3$, $0<x<2$, $0<y<3$), lithium aluminum titanium phosphate ($Li_xAl_yTi_z(PO_4)_3$, $0<x<2$, $0<y<1$, $0<z<3$), $(LiAlTiP)_xO_y$-based glass such as $14Li_2O$-$9Al_2O_3$-$38TiO_2$-$39P_2O_5$($0<x<4$, $0<y<13$), lithium lanthanum titanate ($Li_xLa_yTiO_3$, $0<x<2$, $0<y<3$), lithium germanium thiophosphate ($Li_xGe_yP_zS_w$, $0<x<4$, $0<y<1$, $0<z<1$, $0<w< 5$) such as $Li_{3.25}Ge_{0.25}P_{0.75}S_4$, lithium nitride ($Li_xN_y$, $0<x<4$, $0<y<2$) such as $Li_3N$, $SiS_2$-based glass ($Li_xSi_yS_z$, $0<x<3$, $0<y<2$, $0<z<4$) such as $Li_3PO_4$-$Li_2S$-$SiS_2$, $P_2S_5$-based glass ($Li_xP_yS_z$, $0<x< 3$, $0<y<3$, $0<z<7$) such as LiI-$Li_2S$-$P_2S_5$, or mixtures thereof.

Meanwhile, in one embodiment of the present disclosure, the inorganic filler may include a hydrophilic inorganic filler. Examples of the hydrophilic inorganic filler include aluminum hydroxide-based inorganic particles. In a specific embodiment, examples of the aluminum hydroxide-based inorganic particles include boehmite ($\gamma$-AlO(OH)), pseudo-boehmite ($Al_2O_3 \cdot H_2O$), diaspore ($\alpha$-AlO(OH)), bayerlite ($\alpha$-$AlO(OH)_3$), gibbsite ($\gamma$-$AlO(OH)_3$), nordstrandite ($AlO(OH)_3$), and the like.

In addition, the inorganic filler may include a fumed-type inorganic filler. As used herein, the term "fumed-type inorganic filler" refers to an inorganic filler in which primary particles formed by hydrolysis in a flame at a temperature of 1,000 °C or higher collide with each other and are linked to form secondary particles, and the secondary particles form three-dimensional aggregates or agglomerates.

Examples of such fumed-type inorganic fillers may include fumed alumina, fumed silica, fumed titanium dioxide, or two or more thereof.

The inorganic filler may have an average particle diameter of 0.005 to 0.5 $\mu$m. For example, the inorganic filler may have an average particle diameter of 0.01 $\mu$m or more, or 0.02 $\mu$m or more, or 0.03 $\mu$m or more, or 0.05 $\mu$m or more, or 0.1 $\mu$m or more, or 0.3 $\mu$m or more, and 0.3 $\mu$m or less, or 0.1 $\mu$m or less, or 0.05 $\mu$m or less, or 0.03 $\mu$m or less, or 0.02 $\mu$m or less, or 0.01 $\mu$m or less. When the average particle diameter of the inorganic filler satisfies the above-described ranges, dispersibility is maintained, making it easy to control the properties of the separator, and mechanical properties can be improved. In addition, it is possible to reduce the probability of internal short circuits occurring during charging and discharging of an electrochemical device due to excessively large pore sizes.

Here, the average particle diameter of the inorganic filler refers to a D50 particle diameter, wherein the "D50 particle diameter" means a particle diameter at a point corresponding to 50% in a cumulative particle number distribution according to particle diameter. The particle diameter can be measured using a laser diffraction method. Specifically, the powder to be measured is dispersed in a dispersion medium and then introduced into a commercially available laser diffraction particle size measuring device (e.g., Microtrac S3500) to measure a difference in diffraction patterns according to the particle size when the particles pass through the laser beam, thereby calculating a particle size distribution. The D50 particle diameter can be measured by calculating a particle diameter at a point corresponding to 50% of the cumulative particle number distribution according to particle diameter in the measuring apparatus.

In one embodiment of the present disclosure, a weight ratio of the inorganic filler to the binder resin may be from 80:20 to 99.9:0.1, or from 90:10 to 99.9:0.1, or from 95:5 to 99.9:0.1, or from 96:4 to 99.5:0.5, or from 97:3 to 99:1. Alternatively, the binder resin may be included in an amount of 20 parts by weight or less, or 10 parts by weight or less, or 7 parts by weight or less, based on 100 parts by weight of the inorganic filler. When the weight ratio of the inorganic filler to the binder resin falls within the ranges described above, the content of the inorganic filler distributed per unit area of the separator is high, thereby making it possible to improve the thermal safety of the separator at high temperatures. For

example, a thermal shrinkage ratio of the separator measured in a machine direction (MD) and a transverse direction (TD) after being left at 150°C for 30 minutes, respectively, can be easily 20% or less, or from 2% to 15%, or from 2% to 10%, or from 2% to 5%, or from 0% to 5%, or from 0% to 2%. In addition, it can be easy to secure sufficient void spaces formed between the inorganic fillers while also ensuring sufficient adhesion between the inorganic fillers.

**Binding Binder Resin**

The binder resin is a component that provides binding between the inorganic fillers and binding force between the porous coating layer and the porous support. The binder resin may further include, in addition to the photoinitiated copolymer resin according to the present disclosure, a binder resin having binding properties (binding binder resin). The binding binder resin may be dissolved or dispersed in an aqueous dispersion medium, and when dispersed in an aqueous dispersion medium, the binding binder resin may be a latex in the form of particles or an emulsion.

The binding binder resin may have a glass transition temperature (Tg) of -200 to 200°C. For example, Tg may be 130°C or less, 100°C or less, 70°C or less, 50°C or less, 30°C or less, or 0°C or less. When the glass transition temperature of the binding binder resin satisfies the above-mentioned range, the mechanical properties such as flexibility and elasticity of the coating layer of the separator that is finally formed can be improved. The binding binder resin may have ion conductivity. When the binding binder resin has ion conductivity, the performance of the battery can be further improved. The binding binder resin may have a dielectric constant of 1.0 to 100 (measurement frequency = 1 kHz), or 10 to 100. When the dielectric constant of the binding binder resin satisfies the above-mentioned range, the salt dissociation degree in the electrolyte can be improved.

In one embodiment of the present disclosure, the binding binder resin may include an acrylic polymer, styrene-butadiene rubber, polyvinyl alcohol, polyvinylpyrrolidone, or two or more thereof.

The acrylic polymer may include an acrylic homopolymer obtained by polymerizing only an acrylic monomer, and may also include a copolymer of an acrylic monomer and another monomer. For example, the acrylic polymer may include polyacrylic acid, a polymer of ethylhexyl acrylate and methyl methacrylate, poly(methyl methacrylate), poly(ethylhexyl acrylate), poly(butyl acrylate), poly(acrylonitrile), a polymer of butyl acrylate and methyl methacrylate, or two or more thereof.

The binding binder resin may be included, for example, in an amount of 0.1 to 10 parts by weight based on 100 parts by weight of the inorganic filler.

**Surfactant**

In one embodiment of the present disclosure, if necessary, the crosslinked structure-containing separator for a lithium secondary battery may include a surfactant. In order to form a coating layer on the olefin polymer porous support, a surfactant may be added to a composition for forming the coating layer, and as a result, the coating layer may include the surfactant.

The surfactant can improve dispersibility within the composition. In addition, as described below, the surfactant can enhance the separator wettability of the composition for forming a coating layer, including an aqueous dispersion medium, thereby preventing a dewetting phenomenon, that is, a phenomenon in which the composition fails to be uniformly coated on the surface of the olefin polymer porous support due to a difference in surface energy between the olefin polymer porous support and the aqueous dispersion medium and instead beads up like water droplets, and thus enabling effective coating of fibrils.

As the surfactant, any surfactant may be used without limitation, as long as it does not degrade battery performance. Non-limiting examples thereof may include fluorine-based surfactants and sulfur-based surfactants. The fluorine-based surfactant serves to improve coating properties by lowering surface tension, and any surfactant commonly used in the art may be used. Preferably, a fluoroaliphatic polymeric ester may be used, and specific examples thereof may include 3M's FC4430, Novec's 4300, and DuPont's Capstone. In addition, the sulfur-based surfactant may include BASF's WE3475.

The content of the surfactant may be 0.1 to 7 parts by weight, or 0.3 to 3 parts by weight, based on 100 parts by weight of the inorganic filler. When the content of the surfactant satisfies the above-described ranges, fibril coating properties of the coating solution can be ensured while maintaining the performance of the separator.

In one embodiment of the present disclosure, the separator may further include additives such as a dispersant and/or a thickener. The additives may include hydroxyethyl cellulose (HEC), hydroxypropyl cellulose (HPC), ethylhydroxyethyl cellulose (EHEC), methylcellulose (MC), carboxymethyl cellulose (CMC), hydroxyalkyl methyl cellulose, cyanoethylene polyvinyl alcohol, ammonium polyacrylate, or two or more thereof, but are not limited thereto.

**Method for Manufacturing Crosslinked Structure-Containing Separator for Lithium Secondary Battery**

In one embodiment of the present disclosure, a method for manufacturing a crosslinked structure-containing separator for a lithium secondary battery includes the steps of: preparing a composition for forming an organic/inorganic composite porous coating layer, coating the composition on a porous support, and irradiating the composition-coated olefin polymer porous support with ultraviolet rays. The composition for forming the organic/inorganic composite porous coating layer may be prepared by adding a binder resin and an inorganic filler in an aqueous dispersion medium. The composition may further include a surfactant and/or a dispersant. In addition, the binder includes the photoinitiated copolymer resin according to the present disclosure and, supplementarily, may further include a binding binder resin.

The binder resin includes the photoinitiated copolymer resin according to the present disclosure.

Hereinafter, the method for manufacturing a crosslinked structure-containing separator for a lithium secondary battery according to one embodiment of the present disclosure will be described with a focus on the main parts.

First, a composition for forming a coating layer, including a binder resin, an inorganic filler, and an aqueous dispersion medium, is prepared and coated on at least one surface of an olefin polymer porous support. The composition may further include additives such as a surfactant or a dispersant, as needed.

The aqueous dispersion medium is advantageous in that it is environmentally friendly and does not require excessive heat for drying. Depending on the type of the binder resin, the aqueous dispersion medium may act as a solvent that dissolves the binder resin or as a dispersion medium that disperses the binder resin without dissolving it. For example, the aqueous dispersion medium may include water, methanol, ethanol, ethylene glycol, diethylene glycol, glycerol alcohol, or two or more thereof. In particular, the aqueous dispersion medium may include water.

Non-limiting examples of a method for applying the composition on the olefin polymer porous support include dip coating, die coating, roll coating, comma coating, microgravure coating, doctor blade coating, reverse roll coating, and direct roll coating.

By coating the composition on the olefin polymer porous support, the photoinitiated copolymer resin can be introduced to the surface of the olefin polymer porous support, and the olefin polymer porous support can be crosslinked upon irradiation with ultraviolet rays. Here, the "surface of the olefin polymer porous support" may include not only the surface of the outermost layer of the olefin polymer porous support, but also the surface of the pores existing inside the olefin polymer porous support.

Next, the method includes a step of irradiating ultraviolet rays to the olefin polymer porous support coated with the composition.

As ultraviolet rays are irradiated, the polymer chains within the olefin polymer porous support are crosslinked, thereby obtaining an olefin polymer porous support containing a crosslinked structure.

Ultraviolet irradiation may be performed by using an ultraviolet crosslinking device, and appropriately adjusting the ultraviolet irradiation time and dose in consideration of the content ratio of the photoinitiated copolymer resin, etc. For example, the ultraviolet irradiation time and dose may be set to conditions such that the polymer chains within the olefin polymer porous support are sufficiently crosslinked to achieve the desired heat resistance, while preventing damage to the separator caused by heat generated from the ultraviolet lamp. In addition, the ultraviolet lamp used in the ultraviolet crosslinking device may be appropriately selected from a high-pressure mercury lamp, a metal lamp, a gallium lamp, etc. depending on the photoinitiated copolymer resin used, and the emission wavelength and capacity of the ultraviolet lamp may be appropriately selected according to the process.

In one embodiment of the present disclosure, the method for manufacturing a crosslinked structure-containing separator for a lithium secondary battery can photocrosslink polymer chains within the olefin polymer porous support using an ultraviolet irradiation dose significantly lower than that generally used for photocrosslinking, thereby increasing the applicability of a mass production process for crosslinked structure-containing separators for lithium secondary batteries.

In one embodiment of the present disclosure, the ultraviolet irradiation dose may be in a range of 10 $mJ/cm^2$ or more, 50 $mJ/cm^2$ or more, 100 $mJ/cm^2$ or more, 500 $mJ/cm^2$ or more, 1,000 $mJ/cm^2$ or more, 2,000 $mJ/cm^2$ or more, or 5,000 $mJ/cm^2$ or more, and 20,000 $mJ/cm^2$ or less, or 15,000 $mJ/cm^2$ or less. When the ultraviolet irradiation dose satisfies the above range, polymer chains within the olefin polymer porous support can be sufficiently crosslinked, thereby enhancing heat resistance.

The ultraviolet irradiation dose may be measured using a portable light meter, called Miltec's H type UV bulb and UV power puck. When measuring the dose using Miltec's H type UV bulb, three types of wavelength values, UVA, UVB, and UVC, are obtained depending on wavelength, and the ultraviolet rays according to the present disclosure correspond to UVA.

In the method for measuring the ultraviolet irradiation dose in the present disclosure, the UV Power Puck is passed under the light source on a conveyor under the same conditions as the sample, and the ultraviolet dose value displayed on the UV Power Puck at this time is referred to as the 'ultraviolet irradiation dose'.

In one embodiment of the present disclosure, the melt-down temperature of the crosslinked structure-containing separator for a lithium secondary battery may be 150°C or more. The melt-down temperature of the separator may be

increased compared to that of a separator including a non-crosslinked porous polyolefin substrate. For example, the melt-down temperature of the separator may be 150°C or more, 160°C or more, 170°C or more, 180°C or more, 190°C or more, or 200°C or more.

## Lithium Secondary Battery

A lithium secondary battery according to one embodiment of the present disclosure includes a positive electrode, a negative electrode, and a separator interposed between the positive electrode and the negative electrode, wherein the separator may include the crosslinked structure-containing separator for a lithium secondary battery as described above.

The lithium secondary battery may have various shapes, such as cylindrical, prismatic, or pouch shape.

The lithium secondary battery may include a lithium metal secondary battery, a lithium-ion secondary battery, a lithium polymer secondary battery, a lithium-ion polymer secondary battery, or the like.

The electrodes to be applied to the present disclosure are not particularly limited, and may be manufactured in a form in which electrode active materials are bonded to electrode current collectors according to conventional methods known in the art.

Non-limiting examples of the positive electrode active material among the electrode active materials may include conventional positive electrode active materials used in the positive electrodes of conventional lithium secondary batteries, particularly lithium manganese oxide, lithium cobalt oxide, lithium nickel oxide, lithium iron oxide, or lithium composite oxides combining these.

Non-limiting examples of the negative electrode active material among the electrode active materials may include conventional negative electrode active materials used in the negative electrodes of conventional lithium secondary batteries, particularly lithium-adsorbing materials such as lithium metal or lithium alloys, carbon, petroleum coke, activated carbon, graphite, or other carbons.

Non-limiting examples of the positive electrode current collector include foils made of aluminum, nickel, or a combination thereof, and non-limiting examples of the negative electrode current collector include foils made of copper, gold, nickel, copper alloys, or combinations thereof.

In one embodiment of the present disclosure, the lithium secondary battery may include an electrolyte, wherein the electrolyte may include a lithium salt and an organic solvent for dissolving the lithium salt. Additionally, an organic solid electrolyte, an inorganic solid electrolyte, or the like may be used as the electrolyte.

The lithium salt may be any lithium salt conventionally used in the electrolyte for secondary batteries without limitation. For example, the anion of the lithium salt may include $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$,$(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$,$(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, or a mixture thereof.

The organic solvent included in the electrolyte may be any conventionally used solvent without limitation, and representative examples may include propylene carbonate, ethylene carbonate, diethyl carbonate, dimethyl carbonate, ethyl methyl carbonate, methyl propyl carbonate, dipropyl carbonate, dimethyl sulfoxide, acetonitrile, dimethoxyethane, diethoxyethane, vinylene carbonate, sulfolane, gamma-butyrolactone, propylene sulfite, tetrahydrofuran, or a mixture thereof.

In addition, for the purpose of improving charge/discharge characteristics, flame retardancy, etc., for example, pyridine, triethyl phosphate, triethanolamine, cyclic ethers, ethylenediamine, n-glyme, hexa-phosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, aluminum trichloride, etc. may be added to the electrolyte. In certain cases, halogen-containing solvents such as carbon tetrachloride or trifluoroethylene may be additionally included to impart nonflammability, and carbon dioxide gas may be further included to improve high-temperature preservation properties.

As the organic solid electrolyte, for example, polyethylene derivatives, polyethylene oxide derivatives, polypropylene oxide derivatives, phosphate ester polymers, poly-agitation lysine, polyester sulfides, polyvinyl alcohol, polyvinylidene fluoride, polymers containing ionic dissociable groups, etc. may be used.

As the inorganic solid electrolyte, for example, nitrides, halides, sulfates, etc. of Li, such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, $Li_3PO_4$-$Li_2S$-$SiS_2$, etc. may be used.

The injection of the electrolyte may be carried out at an appropriate step during the battery manufacturing process according to the manufacturing process of the final product and the required properties. That is, it may be applied before battery assembly or at the final stage of battery assembly.

The embodiments described above in the present disclosure may be implemented alone. Furthermore, it goes without saying that two or more of the embodiments may be implemented in combination. Hereinafter, the present disclosure will be described in detail by way of examples. However, the examples according to the present disclosure may be modified in various different forms, and the scope of the present disclosure is not construed as being limited to the

following examples. The examples of the present disclosure are provided to explain the present disclosure more completely to those skilled in the art.

## EXAMPLES

### Production Example 1

Benzophenone methacrylate as a first repeating unit and acryloyl morpholine as a second repeating unit were prepared and introduced into a reaction vessel at a weight ratio of 1:99, and added to a polymerization solvent. Additionally, mercaptopropionic acid was added as a molecular weight regulator(chain transfer agent, CTA) in an amount of about 5,000 ppm relative to the monomer content. The polymerization solvent was a mixture of distilled water and ethanol in a weight ratio of 9:1. The reaction vessel was then purged with $N_2$ and the temperature was raised to an initiation temperature of 70°C. Potassium persulfate was added as an initiator, and the reaction was allowed to proceed for about 8 hours. The solid precipitated after polymerization was washed with ethyl acetate and dried in an oven at about 50°C to obtain a photoinitiated copolymer resin. The obtained photoinitiated copolymer resin had a molecular weight (Mw) of 11,600 and a PDI of 13.17. Additionally, the Tg was confirmed to be about 170°C. The content of the first repeating unit was about 1 wt%, corresponding to the amount introduced.

### Production Example 2

Benzophenone methacrylate and acryloyl morpholine were prepared and introduced into a reaction vessel at a weight ratio of 1.5:98.5, and added to a polymerization solvent. Additionally, mercaptopropionic acid was added as a molecular weight regulator(chain transfer agent, CTA) in an amount of about 5,000 ppm relative to the monomer content. The polymerization solvent was a mixture of distilled water and ethanol in a weight ratio of 9:1. The reaction vessel was then purged with $N_2$ and the temperature was raised to an initiation temperature of 70°C. Potassium persulfate was added as an initiator, and the reaction was allowed to proceed for about 8 hours. The solid precipitated after polymerization was washed with ethyl acetate and dried in an oven at about 50°C to obtain a photoinitiated copolymer resin. The obtained photoinitiated copolymer resin had a molecular weight (Mw) of 13,000 and a PDI of 13.5. Additionally, the Tg was confirmed to be about 171°C. The content of the first repeating unit was about 1.5 wt%, corresponding to the amount introduced.

### Production Example 3

Benzophenone methacrylate and acryloyl morpholine were prepared and introduced into a reaction vessel at a weight ratio of 2.0:98, and added to a polymerization solvent. Additionally, mercaptopropionic acid was added as a molecular weight regulator(chain transfer agent, CTA) in an amount of about 5,000 ppm relative to the monomer content. The polymerization solvent was a mixture of distilled water and ethanol in a weight ratio of 9:1. The reaction vessel was then purged with $N_2$ and the temperature was raised to an initiation temperature of 70°C. Potassium persulfate was added as an initiator, and the reaction was allowed to proceed for about 8 hours. The solid precipitated after polymerization was washed with ethyl acetate and dried in an oven at about 50°C to obtain a photoinitiated copolymer resin. The obtained photoinitiated copolymer resin had a molecular weight (Mw) of 17,000 and a PDI of 14.1. Additionally, the Tg was confirmed to be about 172°C. The content of the first repeating unit was about 2.0 wt%, corresponding to the amount introduced.

[Table 1]

| | First unit content | Second unit content | Copolymer molecular weight | Copolymer PDI | Copolymer Tg (°C) |
|---|---|---|---|---|---|
| Production Example 1 | 1 wt% | 99 wt% | 11,600 | 13.17 | 170°C |
| Production Example 2 | 1.5 wt% | 98.5 wt% | 13,000 | 13.5 | 171°C |
| Production Example 3 | 2.0 wt% | 98 wt% | 17,000 | 14.1 | 172°C |

Comparative Production Example 1

Acrylic acid was introduced into a reaction vessel and added to a polymerization solvent. Additionally, mercaptopropionic acid was added as a molecular weight regulator(chain transfer agent, CTA) in an amount of about 8,000 ppm relative to the monomer content. Distilled water was used as the polymerization solvent. The reaction vessel

was then purged with $N_2$ and the temperature was raised to an initiation temperature of 70°C. Potassium persulfate was added as an initiator, and the reaction was allowed to proceed for about 8 hours. The solid precipitated after polymerization was washed with ethyl acetate and dried in an oven at about 50°C to obtain polyacrylic acid. Its molecular weight (Mw) was confirmed to be about 110,000, with a PDI of about 4.08. The Tg was confirmed to be about 100°C.

**Example 1**

A composition for forming a coating layer (solid content: 35%) was prepared by mixing the photoinitiated copolymer resin of Production Example 1, an inorganic filler, a binding binder resin, a dispersant, and a surfactant in water as an aqueous dispersion medium. The types and contents of the components included in the composition are listed in Table 2 below.

The composition was applied to a polyethylene porous film (thickness: about 14.8 μm, porosity: about 40%-45%) using a Mayer bar, followed by drying. An exposure device (Miltec HPI UV exposure device) and a lamp (Miltec Arc lamp) were prepared to irradiate the porous film coated with the composition with ultraviolet rays of UV-A at an accumulated dose of 5800 mJ/$cm^2$ and a UV irradiation intensity of 50% of the UV light source, thereby manufacturing a separator. The organic/inorganic composite porous coating layer formed on the separator surface had a thickness of about 3.3 μm.

**Example 2**

A separator was manufactured in the same manner as in Example 1, except that the photoinitiated copolymer resin of Production Example 2 was used.

**Example 3**

A separator was manufactured in the same manner as in Example 1, except that the photoinitiated copolymer resin of Production Example 3 was used.

**Comparative Example 1**

A composition (solid content: 35%) for forming a coating layer was prepared using heat-resistant binder 1 (see Table 1 below) instead of the photoinitiated copolymer resin. The composition was applied to a polyethylene porous film (thickness: about 14.5 μm, porosity: about 40%-45%) using a Mayer bar, followed by drying. The organic/inorganic composite porous coating layer formed on the separator surface had a thickness of about 3.3 μm.

**Comparative Example 2**

The polyacrylic acid produced in Comparative Production Example 1 was added to an aqueous NaOH solution to prepare a dispersion solution. At this time, the NaOH was about 1 molar equivalent (1.0 eq.) relative to the carboxyl group of the polyacrylic acid. The glass transition temperature of the polyacrylic acid containing a carboxylate at the terminal substituted with $Na^+$ was measured to increase to about 170°C. Thereafter, an inorganic filler, a binding binder resin, a dispersant, and a surfactant were added to the dispersion solution prepared as described above to prepare a composition for forming a coating layer (solid content: 35%). The composition was applied to a polyethylene porous film (thickness: about 14.8 μm, porosity: about 40%-45%) using a Mayer bar, followed by drying. The organic/inorganic composite porous coating layer formed on the separator surface had a thickness of about 3.3 μm.

Table 2]

| phr (parts by weight, based on total inorganic filler content (100 parts by weight)) | | Example 1 | Example 2 | Example 3 |
|---|---|---|---|---|
| Inorganic filler (Product name: ALK-L1, $Al_2O_3$) | Content | 100 | 100 | 100 |
| Dispersant (Product name: BYK-154, BYK) (ammonium polyacrylate-based) | Content | 1 | 1 | 1 |

(continued)

| phr (parts by weight, based on total inorganic filler content (100 parts by weight)) | | | Example 1 | Example 2 | Example 3 |
|---|---|---|---|---|---|
| Binder resin | Binding binder (Product name: CSB-140, TOYO CHEM) Acrylic emulsion | Content | 1.5 | 1.5 | 1.5 |
| | Heat-resistant binder 1 (Product name: GR-501, HUNAN GREEN POWER) Polyacrylic acid, Tg: 210°C, molecular weight (Mw): about 200,000 | Content | 0 | 0 | 0 |
| | Heat-resistant binder 2 (Production Example 2) | Content | 0 | 0 | 0 |
| Surfactant (Product name: WE-3475, BASF) Di-2-ethylhexyl sulphosuccinate, sodium salt | | Content | 0.1 | 0.1 | 0.1 |
| Photoinitiated copolymer resin | Content | 3 | 3 | 3 | |

[Table 3]

| phr (parts by weight, based on total inorganic filler content (100 parts by weight)) | | | Comparative Example 1 | Comparative Example 2 |
|---|---|---|---|---|
| Inorganic filler (Product name: ALK-L1, $Al_2O_3$) | | Content | 100 | 100 |
| Dispersant (Product name: BYK-154, BYK) (ammonium polyacrylate-based) | | Content | 1 | 1 |
| Binder resin | Binding binder (Product name: CSB-140, TOYO CHEM) Acrylic emulsion | Content | 1.5 | 1.5 |
| | Heat-resistant binder 1 (Product name: GR-501, HUNAN GREEN POWER) Polyacrylic acid, Tg: 210°C, molecular weight (Mw): about 200,000 | Content | 3 | 0 |
| | Heat-resistant binder 2 (Production Example 2) | Content | 0 | 3 |
| Surfactant (Product name: WE-3475, BASF) Di-2-ethylhexyl sulphosuccinate, sodium salt | | Content | 0.1 | 0.1 |
| Photoinitiated copolymer resin (Production Example 1) | | Content | 0 | 0 |

Evaluation Example 1: Measurement of Shrinkage Rate

Samples were prepared by cutting the separators obtained in Examples 1 to 3 and Comparative Examples 1 and 2 into 5 cm × 5 cm pieces. After marking four points on each sample at a distance of 1.5 cm from the center, the samples were placed in a Mathis oven at 150 °C for 30 minutes and then taken out. The distances between the points on the separators were measured with a ruler to calculate and confirm the shrinkage rate, which are summarized and shown in Table 4 below. Referring to the table, it was confirmed that the separators according to Examples 1 to 3 exhibited a shrinkage rate in a range of 7% to 13%, whereas the separators of Comparative Examples 1 and 2 showed a shrinkage rate of about 20% or more. Therefore, it was confirmed that the heat resistance is improved in the case of the separator into which the photoinitiated copolymer resin according to the present disclosure is introduced. In the present disclosure, the shrinkage rate is expressed as a percentage of the "difference in the distance between the points before and after shrinkage" relative to the "distance between the points before shrinkage."

[Table 4]

| | Shrinkage rate (%) (horizontal/vertical) |
|---|---|
| Comparative Example 1 | 63/63 |
| Comparative Example 2 | 23/37 |
| Example 1 | 7/13 |
| Example 2 | 9/13 |
| Example 3 | 13/7 |

**(Measurement of Molecular Weight)**

The molecular weight (weight average molecular weight and number average molecular weight) of the photoinitiated copolymer resin was measured through gel permeation chromatography (GPC). PL GPC220 from Agilent Technologies was used, and the measurement conditions were as follows:

Column (maker, model no.): 2 x TSKgel SupermultiporeHZ-M + TSKgel SuperHZ-2500
Eleunt : THF
Temperature : 40°C
Flow rate: 1.0 mL/min
Injection volume, sample concentration : 30 μL , 1~10 mg/mL
Standard : Polystyrene
Detector: RI

**(Measurement of Repeating Unit Content)**

The content of the repeating units was measured by $^1$H-NMR. It was determined by comparing the number of hydrogen peaks of the $CH_2$ groups in the main chain with that of the aromatic groups of the side chains in the obtained polymer. A Bruker (300 MHz) instrument was used for the measurements, with tetramethylsilane (TMS) employed as the reference material, and $CDCl_3$ (deuterated chloroform) used as the solvent. All spectral data were processed using MestReNova (Version 6.0.2).

**(Measurement of Glass Transition Temperature)**

The glass transition temperature (Tg) of the photoinitiated copolymer resin was measured using a differential scanning calorimetry (DSC) instrument (TA Instrument). For each production example, a sample of 10 mg to 15 mg was obtained and cooled from ambient temperature to -30°C, then heated to 200°C at 10°C/min. Then, the sample was cooled to -30°C and reheated at 10°C/min for measurement.

## Claims

1. A photoinitiated copolymer resin comprising: as repeating units, a first unit to which a functional group derived from an aromatic carbonyl compound is bonded, and a second unit including a hydrophilic group including a nitrogen-containing ring and/or an amine group at the terminal.

2. The photoinitiated copolymer resin of claim 1, wherein the aromatic carbonyl compound includes a benzophenone-based compound, a xanthone-based compound, a thio×anthone-based compound, or a combination of two or more thereof.

3. The photoinitiated copolymer resin of claim 1, wherein the first unit includes a repeating unit of Chemical Formula 1a below, a repeating unit of Chemical Formula 1b below, or a repeating unit of both:

[Chemical Formula 1a]

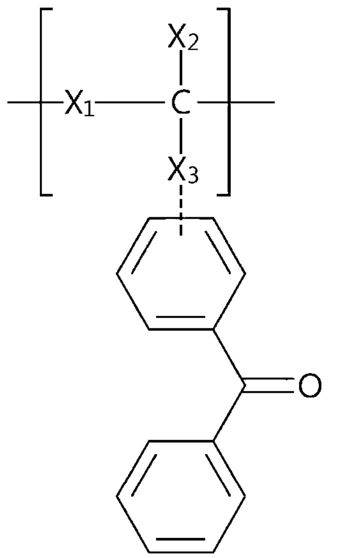

[Chemical Formula 1b]

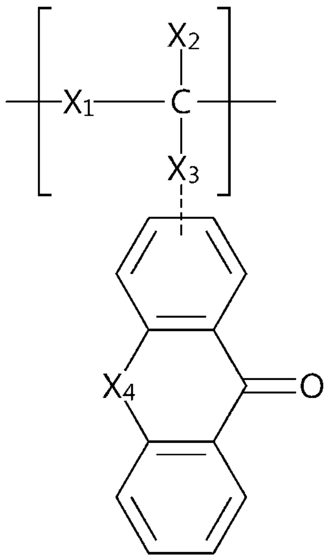

.

wherein $X_1$ is a single bond, or a linear or branched alkylene group ($-CH_2-$) having 1 to 5 carbon atoms, wherein at least one hydrogen of the alkylene group is optionally substituted with a linear or branched alkyl group having 1 to 3 carbon atoms,
$X_2$ is hydrogen, or a linear or branched alkyl group having 1 to 5 carbon atoms,
$X_3$ is $R_1$, $R_2$, or $R_1R_2$, wherein $R_1$ is an alkylene group having 1 to 10 carbon atoms, -O-, -C(=O)-, -C(=O)-O-, -O-C(=O)-O-, -O-C(=O)-, -NH-, an ester group, an amide group, an alkoxy group, or a carbonyl group, and $R_2$ is a divalent linking group including at least one selected from the group consisting of an ester group, an amide group, an alkoxy group, a carbonyl group, a carboxyl group, -O-, -C(=O)-, -C(=O)-O-, -0-C(=O)-O-, -O-C(=O)-, -S-, $-S(=O)_2-$, - $S(=O)_2$-O-, -NH-, $-NR_3$ (wherein $R_3$ is an alkyl group or an acyl group), -NH-C(=O)-, - C(=O)NH-, and =N-,
$X_4$ is oxygen or sulfur, and
the dashed line indicates a linkage of $X_3$ and is bonded to position 2, position 3, or position 4 of the aromatic ring.

**4.** The photoinitiated copolymer resin of claim 1, wherein the first unit includes Chemical Formula 2a below, Chemical

Formula 2b below, Chemical Formula 2c below, Chemical Formula 2d below, or a combination of two or more thereof:

[Chemical Formula 2a]

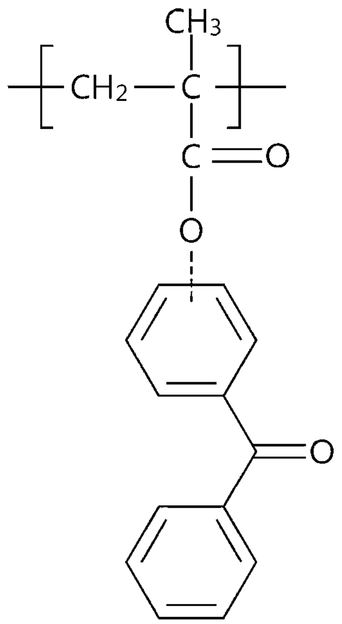

[Chemical Formula 2b]

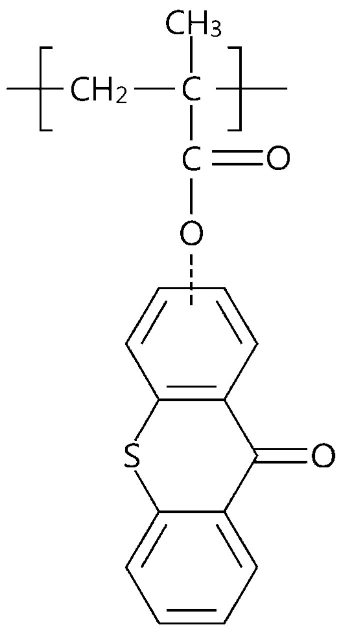

[Chemical Formula 2c]

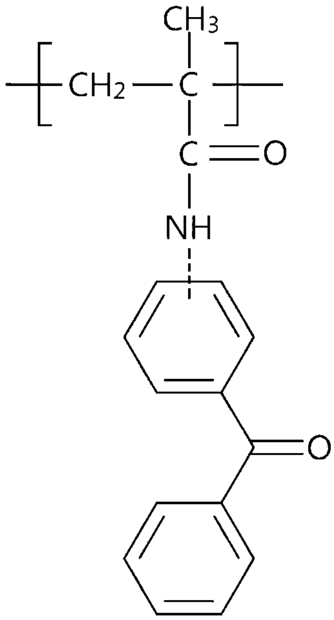

[Chemical Formula 2d]

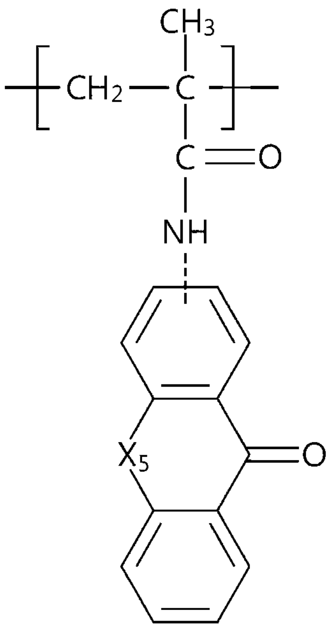

wherein $X_5$ in Chemical Formula 2d above is sulfur or oxygen.

**5.** The photoinitiated copolymer resin of claim 1, wherein the hydrophilic group of the second unit is linked to the main chain through an amide bond.

**6.** The photoinitiated copolymer resin of claim 1, wherein the second unit includes a repeating unit represented by Chemical Formula 5 below:

[Chemical Formula 5]

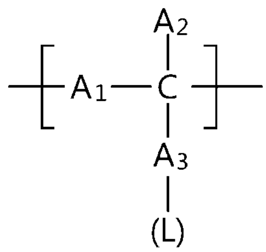

wherein $A_1$ is a single bond, or a linear or branched alkylene group (-$CH_2$-) having 1 to 5 carbon atoms, wherein at least one hydrogen of the alkylene group is optionally substituted with a linear or branched alkyl group having 1 to 3 carbon atoms,

$A_2$ is hydrogen, or a linear or branched alkyl group having 1 to 5 carbon atoms,

$A_3$ is null, or is $R_1$, $R_2$, or $R_1R_2$, wherein $R_1$ is an alkylene group having 1 to 10 carbon atoms, -O-, -C(=O)-, -C(=O)-O-, -O-C(=O)-O-, -O-C(=O)-, -NH-, an ester group, an amide group, an alkoxy group, or a carbonyl group, and $R_2$ is a divalent linking group including at least one selected from the group consisting of an ester group, an amide group, an alkoxy group, a carbonyl group, a carboxyl group, -O-, -C(=O)-, -C(=O)-O-, -O-C(=O)-O-, -O-C(=O)-, -S-, -S(=O)$_2$-, -S(=O)$_2$-O-, -NH-, -$NR_3$ (wherein $R_3$ is an alkyl group or an acyl group), -NH-C(=O)-, -C(=O)NH-, and =N-, wherein when $A_3$ is null, it means a single bond through which (L) is directly bonded to the carbon of the main chain, and

the (L) has a hydrophilic group including a nitrogen-containing ring and/or an amine group at the terminal.

**7.** The photoinitiated copolymer resin of claim 1, wherein the hydrophilic group includes a morpholine-derived group, a piperidine-derived group, an oxazolidine-derived group, a thiooxazolidine-derived group, an ethyleneimine-derived group, a pyrrole-derived group, an imidazole-derived group, a diazetidine-derived group, a dithiazine-derived group, an azocane-derived group, an azonane-derived group, -$NR_4R_5$, or two or more thereof, wherein $R_4$ and $R_5$ are each independently hydrogen or an alkyl group having 1 to 10 carbon atoms.

**8.** The photoinitiated copolymer resin of claim 6, wherein the second unit includes a repeating unit represented by Chemical Formula 5a, a repeating unit represented by Chemical Formula 5b, or both:

[Chemical Formula 5a]

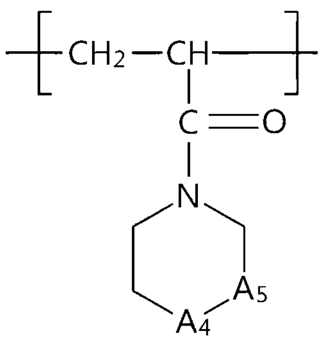

[Chemical Formula 5b]

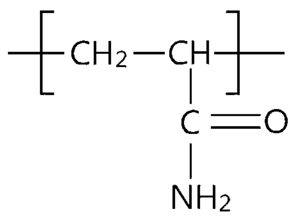

wherein $A_4$ in Chemical Formula 5a above is oxygen (O), sulfur (S), or phosphorus (P), and $A_5$ is an alkenylene group (-($CH_2$)-) having 1 to 5 carbon atoms.

**9.** The photoinitiated copolymer resin of claim 1, wherein the photoinitiated copolymer resin includes a compound represented by Chemical Formula 7a below and/or a compound represented by Chemical Formula 7b below, wherein the first unit is included in an amount of 10 wt% or less based on 100 wt% of the photoinitiated copolymer resin:

[Chemical Formula 7a]

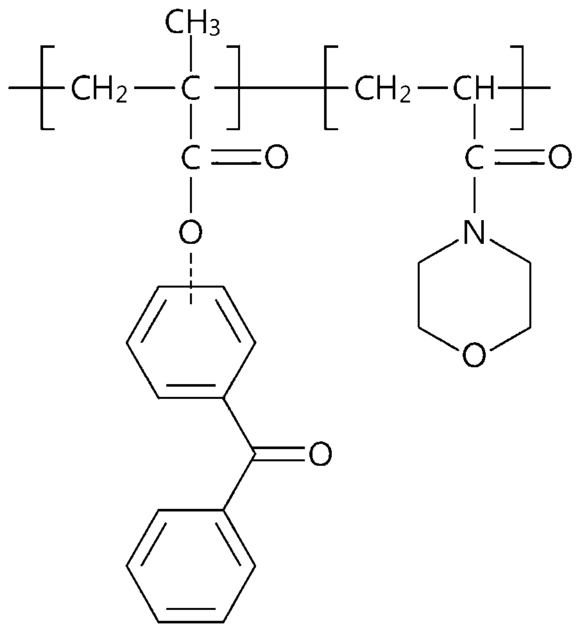

[Chemical Formula 7b]

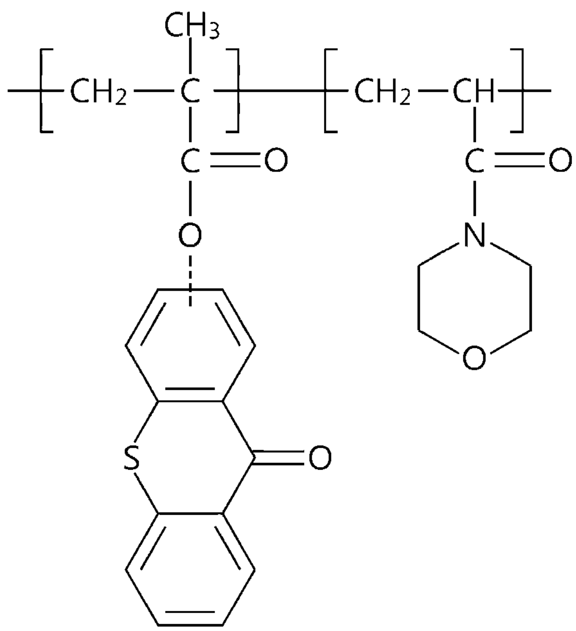

**10.** The photoinitiated copolymer resin of claim 1, wherein the photoinitiated copolymer resin includes the first repeating unit in an amount of 10 wt% or less based on 100 wt% of the total photoinitiated copolymer resin.

**11.** The photoinitiated copolymer resin of claim 1, wherein the photoinitiated copolymer resin has a glass transition temperature of 130°C to 220°C.

**12.** The photoinitiated copolymer resin of claim 1, wherein the photoinitiated copolymer resin has a molecular weight of 5,000 to 100,000.

**13.** The photoinitiated copolymer resin of claim 1, wherein the photoinitiated copolymer resin has a PDI of 7 to 20.

**14.** A crosslinked structure-containing separator for a lithium secondary battery, the separator comprising: a crosslinked structure-containing olefin polymer porous support having a crosslinked structure in which polymer chains are directly linked to each other; a binder resin; and an inorganic filler,
wherein the binder resin includes the photoinitiated copolymer resin of claim 1, and the photoinitiated copolymer resin is included in an amount of 50 wt% or more based on 100 wt% of the binder resin.

**15.** The crosslinked structure-containing separator of claim 14, wherein the separator includes the crosslinked structure-containing olefin polymer porous support; and an organic/inorganic composite porous coating layer positioned on at least one surface of the porous support,

wherein the photoinitiated copolymer resin is included in at least one of the crosslinked structure-containing olefin polymer porous support and the organic/inorganic composite porous coating layer, and
wherein the organic/inorganic composite porous coating layer includes a binder resin and an inorganic filler, wherein the inorganic filler is included in an amount of 70 wt% or more based on 100 wt% of the organic/inorganic composite porous coating layer.

**16.** The crosslinked structure-containing separator of claim 15, wherein the photoinitiated copolymer resin is included in an amount of 0.1 to 5 parts by weight based on 100 parts by weight of the inorganic filler.

**17.** A lithium secondary battery, comprising: a positive electrode, a negative electrode, and a separator interposed between the positive electrode and the negative electrode, wherein the separator is the crosslinked structure-containing separator for a lithium secondary battery according to claim 14.

**18.** A method for manufacturing a crosslinked structure-containing separator for a lithium secondary battery, the method comprising:

coating a composition including a photoinitiated copolymer resin, an inorganic filler, and an aqueous dispersion medium on an olefin polymer porous support by applying and drying the composition; and irradiating ultraviolet rays to the olefin polymer porous support coated with the composition,
wherein the photoinitiated copolymer resin is the photoinitiated copolymer resin of claim 1.

**19.** The method of claim 18, wherein the irradiating of the ultraviolet rays, an ultraviolet irradiation dose is 10 $mJ/cm^2$ or more and 20,000 $mJ/cm^2$ or less.

**20.** The photoinitiated copolymer resin of claim 1, wherein the photoinitiated copolymer resin includes: as a first repeating unit, a repeating unit represented by Chemical Formula 2a below, a repeating unit represented by Chemical Formula 2b below, or both, and, as a second repeating unit, a repeating unit represented by Chemical Formula 5a, wherein the first repeating unit is included in an amount of 10 wt% or less based on 100 wt% of the photoinitiated copolymer resin:

[Chemical Formula 2a]

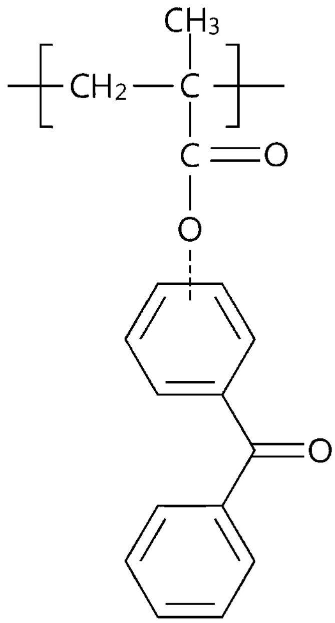

[Chemical Formula 2b]

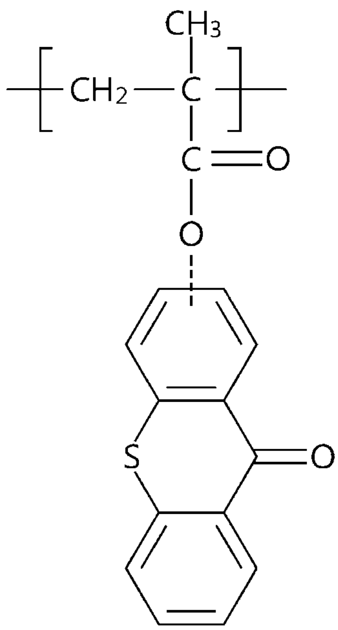

[Chemical Formula 5a]

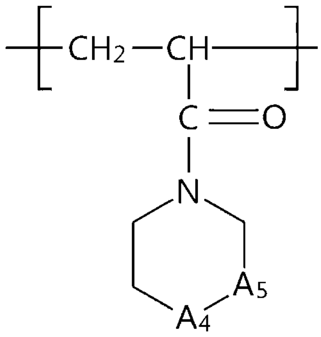

wherein $A_4$ in Chemical Formula 5a is oxygen (O), sulfur (S), or phosphorus (P), and $A_5$ is an alkenylene group ($-(CH_2)-$) having 1 to 5 carbon atoms.

## INTERNATIONAL SEARCH REPORT

International application No.
**PCT/KR2024/012288**

**A. CLASSIFICATION OF SUBJECT MATTER**

**C08F 220/58**(2006.01)i; **C08F 220/30**(2006.01)i; **H01M 50/417**(2021.01)i; **H01M 50/42**(2021.01)i; **H01M 50/446**(2021.01)i; **H01M 50/449**(2021.01)i; **H01M 50/431**(2021.01)i; **H01M 50/403**(2021.01)i; **H01M 10/052**(2010.01)i

According to International Patent Classification (IPC) or to both national classification and IPC

**B. FIELDS SEARCHED**

Minimum documentation searched (classification system followed by classification symbols)

C08F 220/58(2006.01); C04B 41/48(2006.01); C08F 120/34(2006.01); C08F 216/06(2006.01); C08F 218/08(2006.01); C08F 265/06(2006.01); C08L 33/04(2006.01); H01M 4/36(2006.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 광개시형 공중합 수지(photoinitiating copolymer resin), 방향족 카르보닐 화합물(aromatic carbonyl compound), 리튬 이차전지(lithium secondary battery), 분리막(separator)

**C. DOCUMENTS CONSIDERED TO BE RELEVANT**

| Category* | Citation of document, with indication, where appropriate, of the relevant passages | Relevant to claim No. |
|---|---|---|
| X | US 2013-0131278 A1 (HUANG, J. et al.) 23 May 2013 (2013-05-23) See claims 12, 13 and 15; figure 4A; paragraphs [0096]-[0101], [0118] and [0185]-[0187]; and table 2. | 1-8,10-13 |
| A | | 9,14-20 |
| X | LIU, F. et al. Thermophilic films and fibers from photo cross-linkable UCST-type polymers. Polymer Chemistry. 2015, vol. 6, pp. 2769-2776. See abstract; Scheme 1; and Experimental part. | 1-3,5-8 |
| A | KR 10-2504187 B1 (HANSOL CHEMICAL CO., LTD.) 02 March 2023 (2023-03-02) See claims 1 and 2. | 1-20 |
| A | CN 116544392 A (BAIYIN ELEPHANT ENERGY TECHNOLOGY CO., LTD.) 04 August 2023 (2023-08-04) See claims 1 and 4. | 1-20 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 November 2024** | **28 November 2024** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**

International application No.
**PCT/KR2024/012288**

**C. DOCUMENTS CONSIDERED TO BE RELEVANT**

| Category* | Citation of document, with indication, where appropriate, of the relevant passages | Relevant to claim No. |
|---|---|---|
| A | KR 10-2012-0001733 A (EVONIK ROEHM GMBH) 04 January 2012 (2012-01-04) See abstract; and claim 1. | 1-20 |

Form PCT/ISA/210 (second sheet) (July 2022)

**INTERNATIONAL SEARCH REPORT**
**Information on patent family members**

International application No.
**PCT/KR2024/012288**

| Patent document cited in search report | Publication date (day/month/year) | Patent family member(s) | Publication date (day/month/year) |
|---|---|---|---|
| US 2013-0131278 A1 | 23 May 2013 | US 2008-0139689 A1 | 12 June 2008 |
| | | US 2014-0058032 A1 | 27 February 2014 |
| | | US 8349410 B2 | 08 January 2013 |
| | | US 8871831 B2 | 28 October 2014 |
| | | WO 2008-021500 A2 | 21 February 2008 |
| | | WO 2008-021500 A3 | 17 July 2008 |
| KR 10-2504187 B1 | 02 March 2023 | EP 4410851 A1 | 07 August 2024 |
| | | JP 2024-532803 A | 10 September 2024 |
| | | WO 2023-054765 A1 | 06 April 2023 |
| CN 116544392 A | 04 August 2023 | None | |
| KR 10-2012-0001733 A | 04 January 2012 | CN 102369240 A | 07 March 2012 |
| | | CN 102369240 B | 08 January 2014 |
| | | CN 202902767 U | 24 April 2013 |
| | | EP 2411466 A1 | 01 February 2012 |
| | | EP 2411466 B1 | 17 July 2013 |
| | | JP 2012-521456 A | 13 September 2012 |
| | | JP 5709835 B2 | 30 April 2015 |
| | | KR 10-1714094 B1 | 08 March 2017 |
| | | US 2011-0319514 A1 | 29 December 2011 |
| | | US 8669328 B2 | 11 March 2014 |
| | | WO 2010-108762 A1 | 30 September 2010 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230108620
- KR 1020060021221